# EUROPEAN PATENT SPECIFICATION

(11) **EP 4 540 629 B1**
(45) Date of publication and mention of the grant of the patent: **03.06.2026**
(21) Application number: 23730958.8
(22) Date of filing: 29.05.2023
(51) Int. Cl.: G01S 17/06, H04N 25/47, H04N 25/773

(54) **PHOTODETECTOR AND PHOTODETECTION SYSTEM**
PHOTODETEKTOR UND PHOTODETEKTORSYSTEM
PHOTODÉTECTEUR ET SYSTÈME DE PHOTODÉTECTION

(30) Priority: 15.06.2022 JP 2022096652
(43) Date of publication of application: 23.04.2025
(73) Proprietor: Sony Semiconductor Solutions Corporation, Atsugi-shi, Kanagawa 243-0014 (JP)
(72) Inventor: OKADA, Chihiro, Atsugi-shi Kanagawa 243-0014 (JP)
(74) Representative: MFG Patentanwälte Meyer-Wildhagen Meggle-Freund Gerhard PartG mbB
(86) International application number: PCT/JP2023/019902
(87) International publication number: WO 2023/243381

(56) References cited:
- US-A1- 2017 139 041
- US-A1- 2019 288 150

## Description

### Technical Field

The present disclosure relates to a photodetector and a photodetection system.

### Background Art

PTL 1 proposes a device that includes a plurality of pixels and detects light. The plurality of pixels each includes a single photon avalanche diode (SPAD) element and a counter circuit.

US 2019/288150 A1 discloses an image sensor with a simple configuration that generates an image to which a filter has been applied. An image sensor includes a plurality of pixels, wherein each pixel includes a photoelectric converter that detects incidence of single photons; and a counter that counts pulses present in an output signal from the photoelectric converter. The image sensor outputs a count value as a pixel value, wherein the count value is obtained by counting the pulses present in the output signals from a plurality of the photoelectric converters in a first period, or by counting the pulses present in the output signal from a single photoelectric converter in the first period and a second period.

US 2017/139041 A1 discloses a ranging device that includes an array of photon detection devices that are adapted to receive an optical signal that is reflected by an object in an image scene. First and second logic devices are adapted to respectively combine the outputs of first and second pluralities of the photon detection devices. A first range detection circuit is coupled to outputs of the first and second logic devices and a first counter is coupled to the output of the first logic device and adapted to generate a first pixel value by counting events that are generated by the first plurality of photon detection devices. A second counter is coupled to the output of the second logic device and is adapted to generate a second pixel value by counting events that are generated by the second plurality of photon detection devices. The first and second pixel values are used in estimating a range to the object in the image scene.

### Citation List

### Patent Literature

PTL 1: JP 2019-161551

### Summary

### Technical Problem

A light detecting device is requested to have improved detection performance.

It is desirable to provide a light detecting device having favorable detection performance.

### Solution to Problem

According to a first aspect, the invention provides a light detecting device in accordance with independent claim 1. According to a second aspect, the invention provides a photodetection system in accordance with claim 15. Further aspects are set forth in the dependent claims, the drawings and the following description.

### Brief Description of Drawings

[Fig.1]Fig. 1 is a diagram illustrating an example of a schematic configuration of a photodetection system according to an embodiment of the present disclosure.
[Fig.2]Fig. 2 is a diagram for describing a configuration example of a photodetector according to an embodiment of the present disclosure.
[Fig.3A]Fig. 3A is a diagram illustrating a configuration example of the photodetector according to the embodiment of the present disclosure.
[Fig.3B]Fig. 3B is a diagram illustrating a configuration example of the photodetector according to the embodiment of the present disclosure.
[Fig.4A]Fig. 4A is a diagram for describing an example of control over a light source by the photodetection system according to the embodiment of the present disclosure.
[Fig.4B]Fig. 4B is a diagram for describing an example of the control over the light source by the photodetection system according to the embodiment of the present disclosure.
[Fig.5]Fig. 5 is a timing chart illustrating an operation example of the photodetection system according to the embodiment of the present disclosure.
[Fig.6A]Fig. 6A is a flowchart illustrating an operation example of the photodetection system according to the embodiment of the present disclosure.
[Fig.6B]Fig. 6B is a flowchart illustrating an operation example of the photodetection system according to the embodiment of the present disclosure.
[Fig.7]Fig. 7 is a schematic diagram illustrating an example of a cross-sectional configuration of the photodetector according to the embodiment of the present disclosure.
[Fig.8]Fig. 8 is a diagram illustrating a configuration example of a photodetector according to a modification example 1 of the present disclosure.
[Fig.9A]Fig. 9A is a diagram illustrating a configuration example of a photodetector according to a modification example 2 of the present disclosure.
[Fig.9B]Fig. 9B is a diagram illustrating another configuration example of the photodetector according to the modification example 2 of the present disclosure.
[Fig.10]Fig. 10 is a diagram illustrating a disposition example of a pixel of the photodetector according to the modification example 2 of the present disclosure.
[Fig.11] Fig. 11 is a diagram illustrating another disposition example of the pixel of the photodetector according to the modification example 2 of the present disclosure.
[Fig.12] Fig. 12 is a diagram illustrating another disposition example of the pixel of the photodetector according to the modification example 2 of the present disclosure.
[Fig.13] Fig. 13 is a diagram illustrating another disposition example of the pixel of the photodetector according to the modification example 2 of the present disclosure.
[Fig.14]Fig. 14 is a diagram illustrating another disposition example of the pixel of the photodetector according to the modification example 2 of the present disclosure.
[Fig.15] Fig. 15 is a timing chart illustrating an operation example of a photodetection system according to a modification example 3 of the present disclosure.
[Fig.16] Fig. 16 is a diagram illustrating a configuration example of a photodetector according to a modification example 4 of the present disclosure.
[Fig.17] Fig. 17 is a block diagram depicting an example of schematic configuration of a vehicle control system.
[Fig.18] Fig. 18 is a diagram of assistance in explaining an example of installation positions of an outside-vehicle information detecting section and an imaging section.
[Fig.19] Fig. 19 is a view depicting an example of a schematic configuration of an endoscopic surgery system.
[Fig.20]Fig. 20 is a block diagram depicting an example of a functional configuration of a camera head and a camera control unit (CCU).

### Description of Embodiments

The following describes an embodiment of the present disclosure in detail with reference to the drawings. It is to be noted that description is given in the following order.
1. Embodiment
2. Modification Examples
3. Usage Examples
4. Practical Application Examples

### <1. Embodiment>

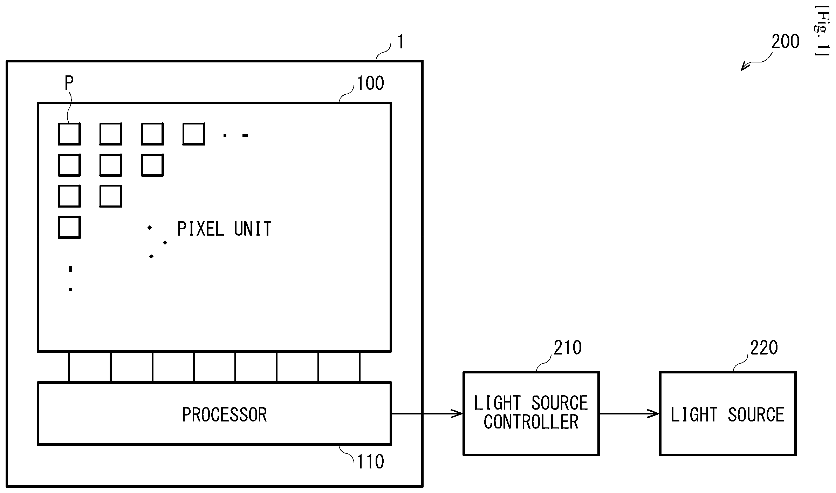

Fig. 1 is a diagram illustrating an example of a schematic configuration of a photodetection system according to an embodiment of the present disclosure. A photodetection system 200 includes a photodetector 1, a light source controller 210, and a light source 220. The photodetector 1 is a device configured to detect incident light (i.e., a light detecting device). The photodetector 1 includes a plurality of pixels P. The plurality of pixels P each includes a light receiving element. The photodetector 1 is configured to photoelectrically convert the incident light and generate a signal.

The photodetector 1 according to the present embodiment is a sensor configured to detect an event. The photodetector 1 may be applied as an event-driven sensor (referred to as an event vision sensor (EVS), an event driven sensor (EDS), a dynamic vision sensor (DVS), or the like). In addition, the photodetector 1 is also a distance measurement sensor configured to measure a distance in a time of flight (TOF) method.

In the example illustrated in Fig. 1, the photodetector 1 includes a region (pixel unit 100) in which the plurality of pixels P is two-dimensionally disposed in a matrix. The light receiving element (light receiving section) of each of the pixels P is, for example, an SPAD element. The photodetector 1 takes in incident light (image light) from a measurement target through an optical system (not illustrated) including an optical lens. The light receiving element may receive light, generate electric charge through photoelectric conversion, and generate a photocurrent.

The photodetector 1 includes a processor 110 configured to perform signal processing. The processor 110 is a signal processing circuit. The processor 110 performs signal processing (information processing). The processor 110 performs various kinds of signal processing on the signal of each of the pixels. The processor 110 outputs the signal of the pixel subjected to the signal processing. Although described below, the processor 110 may generate and output a signal related to a motion of the measurement target, a signal related to an intensity value, and a signal related to a distance to the measurement target. An intensity value (e.g., an intensity value associated with a pixel, such as an R pixel, a G pixel, or a B pixel) may also be referred to herein as a grayscale value.

The processor 110 is also a controller. The processor 110 is configured to control each unit of the photodetector 1. The processor 110 includes a plurality of circuits including, for example, a timing generator, a shift register, an address decoder, and the like. The timing generator generates a variety of timing signals. The processor 110 may supply each of the pixels P with a signal for driving the pixel P and control an operation of the pixel P. In addition, the processor 110 may supply the light source controller 210 with a signal for controlling the light source controller 210 to control an operation of the light source controller 210.

The light source 220 includes a plurality of light emitting elements. The light emitting elements are, for example, light emitting diodes (LEDs) or laser diodes. In the light source 220, the plurality of light emitting elements is two-dimensionally disposed in a matrix. The light source 220 may generate, for example, laser light and emit the laser light to outside. The light source 220 may include Vertical Cavity Surface Emitting Laser (VCSEL).

The light source controller 210 is configured to drive the light source 220. The light source controller 210 is a driver (drive circuit). The light source controller 210 may control an operation of the light source 220. The light source controller 210 is configured to control, for example, a current and a voltage for a light emitting element in the light source 220. The light source controller 210 includes a plurality of circuits including, for example, a digital to analog converter (DAC), an amplifier circuit, and the like.

The light source controller 210 may supply the light source 220 with a current and a voltage for driving each of the light emitting elements in the light source 220 to control light emission by the light source 220. The light source controller 210 is a driver configured to control driving of the light emitting elements in the light source 220. The light source controller 210 may be referred to as driver IC (driver circuit).

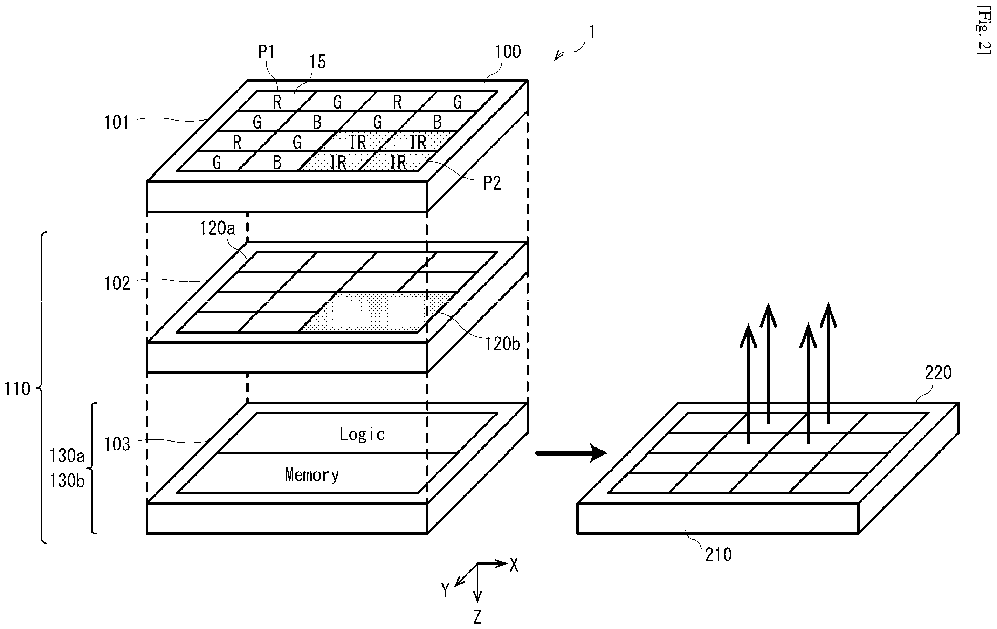

Fig. 2 is a diagram for describing a configuration example of the photodetector according to the embodiment. As illustrated in Fig. 2, the photodetector 1 includes a first substrate 101, a second substrate 102, and a third substrate 103. The first substrate 101, the second substrate 102, and the third substrate 103 are stacked on top of each other. First substrate 101 is stacked on top of second substrate 102. Second substrate 102 is stacked on top of third substrate 103.

The photodetector 1 has a structure (stacked structure) in which the first substrate 101, the second substrate 102, and the third substrate 103 are stacked in a Z axis direction. It is to be noted that, as illustrated in Fig. 2, an incidence direction of light from an object which is the measurement target is defined as the Z axis direction, a left/right direction orthogonal to the Z axis direction is defined as an X axis direction, and a direction orthogonal to the Z axis direction and the X axis direction is defined as a Y axis direction. In the following diagrams, a direction is sometimes expressed with reference to a direction of an arrow in Fig. 2.

The first substrate 101 is provided with the pixel unit 100. In the pixel unit 100, the plurality of pixels P is disposed in a horizontal direction (row direction) that is a first direction and a vertical direction (column direction) that is a second direction orthogonal to the first direction. Each of the pixels P in the pixel unit 100 includes a filter 15. The filter 15 is configured to selectively transmit light in a specific wavelength range among the pieces of incident light. The filter 15 is an RGB color filter, a filter that transmits infrared light, or the like.

The plurality of pixels P in the pixel unit 100 includes a plurality of pixels P1 and a plurality of pixels P2. Each of the pixels P1 is a pixel including a light receiving element configured to receive visible light and output a photocurrent. Each of the pixels P2 is a pixel including a light receiving element configured to receive invisible light (also referred to as non-visible light) and output a photocurrent. In one example, the plurality of pixels P1 includes a pixel (R pixel) including the filter 15 that transmits light in a wavelength range for red, a pixel (G pixel) including the filter 15 that transmits light in a wavelength range for green, and a pixel (B pixel) including the filter 15 that transmits light in a wavelength range for blue. The R pixels, the G pixels, and the B pixels are disposed, for example, in accordance with a so-called Bayer arrangement.

The R pixel, the G pixel, and the B pixel are configured to generate a signal of an R component, a signal of a G component, and a signal of a B component, respectively. It is possible to obtain RGB pixel signals on the basis of electric charge resulting from photoelectric conversion by the R pixel, the G pixel, and the B pixel.

The pixel P2 is, for example, a pixel (IR pixel) including the filter 15 that transmits infrared light. The pixel P2 is configured to generate a signal of an IR component. The pixel P2 is usable to measure a distance in the TOF method. In the photodetection system 200, the light source 220 irradiates the object that is the measurement target with light (e.g., infrared light). The light receiving element of the pixel P2 of the photodetector 1 receives light reflected from the object. A signal of the pixel P2 is a signal corresponding to the distance to the object that is the measurement target. The photodetector 1 is configured to obtain a distance signal for each of the pixels P2.

It is to be noted that the filters provided in the pixels P1 in the pixel unit 100 are not limited to color filters for primary colors (RGB). The pixels P1 may include, for example, color filters for complementary colors such as cyan (Cy), magenta (Mg), and yellow (Ye). In addition, it is also possible to refrain from providing the filters 15 in a portion or all of the pixels of the photodetector 1.

The second substrate 102 and the third substrate 103 are provided with the processor 110. The processor 110 is separately disposed in the second substrate 102 and the third substrate 103. The processor 110 includes a first circuit unit 140a and a second circuit unit 140b. The first circuit unit 140a includes a pixel circuit section 120a and a signal processing section 130a. The second circuit unit 140b includes a pixel circuit section 120b and a signal processing section 130b. In the example illustrated in Fig. 2, the pixel circuit section 120a and the pixel circuit section 120b are disposed in the second substrate 102. As illustrated in Fig. 2, the pixel circuit section 120a is provided for the pixel P1. The pixel circuit section 120b is provided for the pixel P2. The signal processing section 130a and the signal processing section 130b each include a logic circuit, a memory, and the like. The signal processing section 130a and the signal processing section 130b are disposed in the third substrate 103.

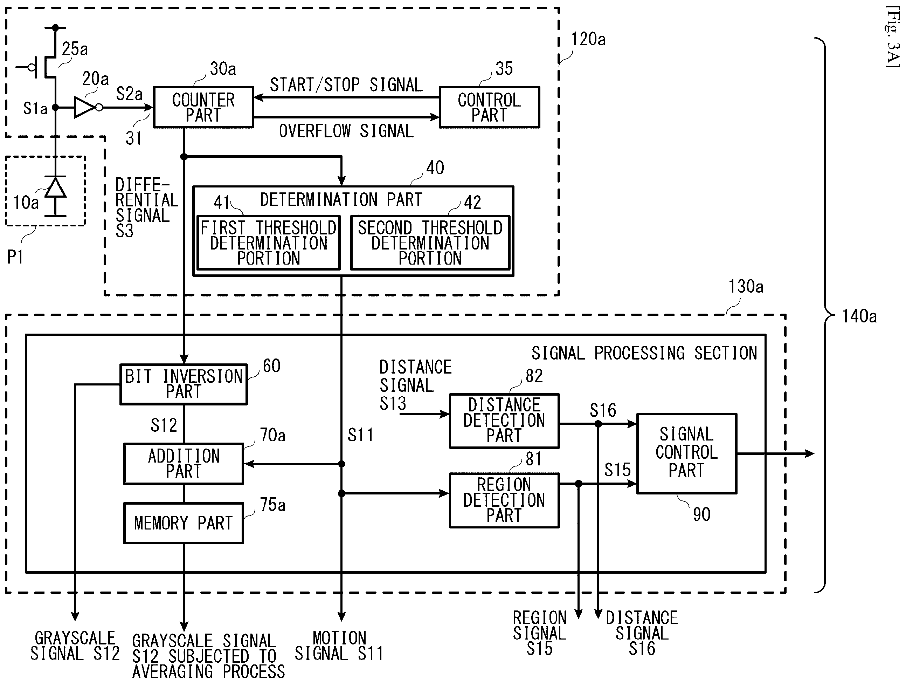

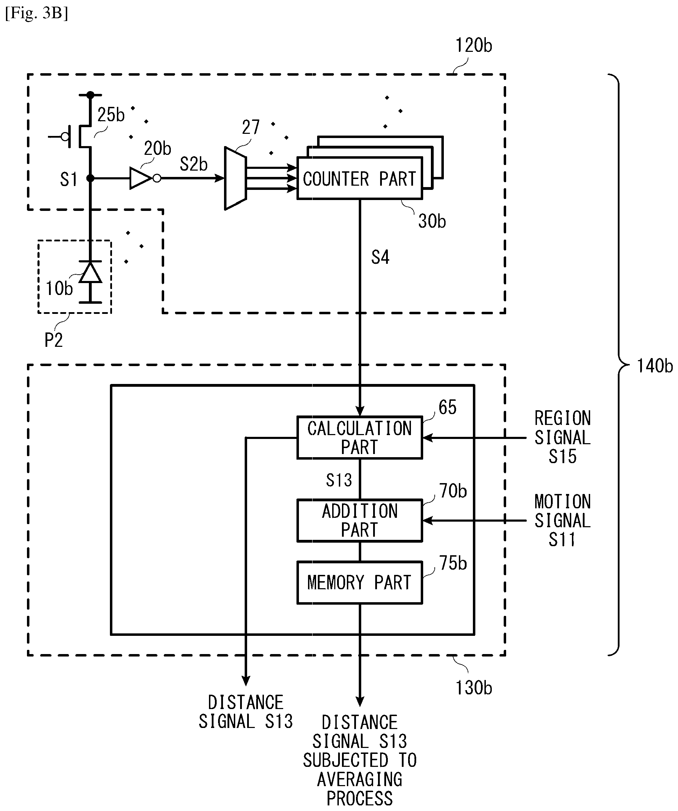

Figs. 3A and 3B are diagrams each illustrating a configuration example of the photodetector according to the embodiment. Fig. 3A illustrates configuration examples of the pixel P1 and the first circuit unit 140a. Fig. 3B illustrates configuration examples of the pixel P2 and the second circuit unit 140b. As illustrated in Fig. 3A, the photodetector 1 includes the pixel P1 and the first circuit unit 140a. The pixel P1 includes a light receiving element 10a. The first circuit unit 140a includes the pixel circuit section 120a and the signal processing section 130a. In the example illustrated in Fig. 3A, the pixel circuit section 120a includes a generation part (also referred to as a generation circuit) 20a, a supply part (also referred to as a supply circuit) 25a, a counter part (also referred to as a counter circuit) 30a, a control part (also referred to as a control circuit) 35, and a determination part (also referred to as a determination circuit) 40. The pixel circuit section 120a is provided for each of the pixels P1.

The light receiving element 10a is configured to receive light and generate a signal. The light receiving element 10a is an SPAD element. The light receiving element 10a may convert an incident photon into electric charge and output a signal S1a that is an electric signal corresponding to the incident photon. It is to be noted that the light receiving element 10a is also referred to as a photoelectric conversion element (photoelectric conversion section) configured to photoelectrically convert light.

The light receiving element 10a is electrically coupled, for example, to a power supply line, an electrode, or the like that allows a predetermined voltage to be supplied. In the example illustrated in Fig. 3A, a cathode that is one of electrodes of the light receiving element 10a is electrically coupled to the power supply line through the supply part 25a. A power supply voltage is supplied through the power supply line. An anode that is another electrode of the light receiving element 10a is electrically coupled to a ground line side or large negative voltage source.

The voltage supplied through the supply part 25a may cause a voltage serving as a potential difference larger than a breakdown voltage of the light receiving element 10a to be applied between the cathode and the anode of the light receiving element 10a. In other words, a potential difference between both ends of the light receiving element 10a may be set to the potential difference larger than the breakdown voltage. In a case where a reverse bias voltage larger than the breakdown voltage is applied to the light receiving element 10a, the light receiving element 10a is operable in a Geiger mode. In the light receiving element 10a in the Geiger mode, an avalanche multiplication phenomenon may occur in response to incidence of a photon and a pulsed current may be generated. In the pixel P1, the signal S1a corresponding to a photocurrent flowing through the light receiving element 10a in response to the incidence of the photon is outputted to the generation part 20a.

The generation part 20a is configured to generate a signal (a voltage signal) S2a based on the signal S1a generated by the light receiving element 10a. In the example illustrated in Fig. 3A, the generation part 20a includes an inverter. The generation part 20a includes a PMOS transistor and an NMOS transistor coupled in series. An input portion of the generation part 20a is electrically coupled to the cathode of the light receiving element 10a and the supply part 25a. An output portion of the generation part 20a is electrically coupled to an input portion 31 of the counter part 30a.

The generation part 20a receives the signal S1a from the light receiving element 10a. A signal level of the signal S1a changes in accordance with the current flowing through the light receiving element 10a. In other words, a voltage (potential) of the signal S1a changes in accordance with the current flowing through the light receiving element 10a. For example, in a case where the voltage of the signal S1a is higher than a threshold, the generation part 20a outputs the low-level signal S2a. In addition, in a case where the voltage of the signal S1a is smaller than the threshold, the generation part 20a outputs the high-level signal S2a. The generation part 20a may output the signal S2a serving as a pulse signal based on the voltage of the signal S1a to the counter part 30a.

In the example illustrated in Fig. 3A, in a case where the light receiving element 10a receives a photon and this causes the signal S1a to have a voltage smaller than a threshold voltage of the inverter serving as the generation part 20a, the inverter causes a voltage of the signal S2a to transition from a low level to a high level. It is to be noted that the generation part 20a may include a buffer circuit, an AND circuit, and the like.

The supply part 25a is configured to supply the light receiving element 10a with a voltage and a current. The supply part 25a is electrically coupled to the power supply line through which the power supply voltage is provided. The supply part 25a may supply the light receiving element 10a with the voltage and the current. In the example illustrated in Fig. 3A, the supply part 25a includes a PMOS transistor. It is to be noted that the supply part 25a may include a resistor.

In a case where the occurrence of avalanche multiplication causes a potential difference between the electrodes of the light receiving element 10a to be smaller than the breakdown voltage, the supply part 25a may supply the light receiving element 10a with the current. The supply part 25a recharges the light receiving element 10a to allow the light receiving element 10a to operate in the Geiger mode again. The supply part 25a is a recharge part. In other words, the supply part 25a recharges the light receiving element 10a with electric charge and recharges the voltage of the light receiving element 10a.

The counter part 30a is configured to perform counting in accordance with a received signal. The counter part 30a includes the one input part 31 (input terminal). The counter part 30a counts pulses of a signal received by the input portion 31. In the example illustrated in Fig. 3A, the input portion 31 of the counter part 30a receives the signal S2a that is a pulse signal. The counter part 30a is configured to count pulses of the signal S2a and output a signal based on a difference in the number of pulses of the signal S2a (also referred to as the number of signals S2a) between two periods. The counter part 30a is provided for each of the pixels P1. The counter part 30a includes, for example, an up-down counter.

The control part 35 is configured to control the counter part 30a. The control part 35 includes a timing generator. The control part 35 is provided for each of the pixels P1. The control part 35 is a timing control part. The control part 35 generates a timing signal, for example, on the basis of a clock signal, a synchronization signal, and the like received from outside and controls an operation of the counter part 30a.

The control part 35 outputs a signal (start signal) for an instruction (request) to start counting to the counter part 30a and controls a timing for the counter part 30a to start counting. In addition, the control part 35 outputs a signal (stop signal) for an instruction to finish counting to the counter part 30a and controls a timing for the counter part 30a to finish counting. The control part 35 may also control the supply part 25a. It is to be noted that the supply part 25a may be controlled by a control circuit different from the control part 35.

In the example illustrated in Fig. 3A, the control part 35 receives an overflow signal from the counter part 30a as a signal (detection signal) indicating that a count value of the counter part 30a reaches a reference value. The overflow signal is a signal indicating an overflow of the count value. In other words, the overflow signal is a signal indicating an overflow of the amount of light received by the light receiving element 10a. The control part 35 supplies the counter part 30a with the stop signal generated on the basis of the overflow signal to control the counter part 30a.

In the present embodiment, in a case where the start signal is inputted to the counter part 30a from the control part 35, the counter part 30a starts counting in a first period Ta. The counter part 30a counts up the number of pulses of the signal S2a in the first period Ta. In a case where the count value of the counter part 30a reaches the reference value, the counter part 30a outputs, to the control part 35, the overflow signal indicating that the count value reaches the reference value and starts counting in a second period Tb. The counter part 30a uses the reference value as an initial value and counts down the number of pulses of the signal S2a in the second period Tb. The overflow signal that is the detection signal is a signal indicating an end of the first period Ta and a start of the second period Tb.

In the present embodiment, the control part 35 generates the stop signal in accordance with the overflow signal received from the counter part 30a. The control part 35 outputs the stop signal to the counter part 30a. The control part 35 outputs the stop signal indicating an end of the second period Tb to the counter part 30a to equalize respective lengths of the first period Ta and the second period Tb. In a case where the stop signal is inputted to the counter part 30a from the control part 35, the counter part 30a finishes counting in the second period Tb.

The counter part 30a generates and outputs a signal (differential signal S3) based on a difference between the number of pulses of the signal S2a in the first period Ta and the number of pulses of the signal S2a in the second period Tb. The counter part 30a may output, as the differential signal S3, a signal indicating a count value corresponding to the difference between the number of pulses of the signal S2a in the first period Ta and the number of pulses of the signal S2a in the second period Tb. For example, a signal value or a count value of the differential signal S3 is a value obtained by subtracting a count value counted down from a count value counted up.

The determination part 40 is configured to determine the magnitude of the difference in the number of pulses on the basis of the differential signal S3. The determination part 40 is configured to determine, for example, whether or not the signal value of the differential signal S3 is larger than a predetermined threshold. In the example illustrated in Fig. 3A, the determination part 40 includes a first threshold determination portion 41 and a second threshold determination portion 42.

The first threshold determination portion 41 is configured to compare a value of the differential signal S3 and a first threshold. The second threshold determination portion 42 is configured to compare the value of the differential signal S3 and a second threshold. For example, the first threshold determination portion 41 is configured to determine whether or not the signal value of the differential signal S3 or a value obtained by subtracting the count value in the second period Tb from the count value in the first period Ta is smaller than the first threshold. The second threshold determination portion 42 is configured to determine whether or not the signal value of the differential signal S3 is larger than second threshold.

In a case where the signal value of the differential signal S3 falls below the first threshold, the first threshold determination portion 41 determines that the motion of the object serving as the measurement target causes a positive event to occur. In a case where the signal value of the differential signal S3 does not fall below the first threshold, the first threshold determination portion 41 determines that no positive event occurs. In a case where the signal value of the differential signal S3 exceeds the second threshold, the second threshold determination portion 42 determines that the motion of the measurement target causes a negative event to occur. In a case where the signal value of the differential signal S3 does not exceed the second threshold, the second threshold determination portion 42 determines that no negative event occurs.

In this way, the determination part 40 may detect presence or absence of occurrence of an event on the basis of the differential signal S3. In a case where the signal value of the differential signal S3 is smaller than the first threshold or larger than the second threshold, the determination part 40 determines that an event occurs. In other words, in a case where the amount of received light changed by the motion of the measurement target causes the amount of change in the count value to exceeds an upper limit or lower limit threshold, the determination part 40 determines that an event is "present".

The determination part 40 generates and outputs the signal (motion signal) related to the motion of the measurement target on the basis of results of determinations made by the first threshold determination portion 41 and the second threshold determination portion 42. The determination part 40 outputs, to the signal processing section 130a, a signal indicating the signal value (count value) of the differential signal S3 and the presence or absence of the occurrence of an event, for example, as a motion signal S11. The motion signal S11 may include a signal indicating presence or absence of occurrence of a positive event and a negative event.

The signal processing section 130a is configured to acquire the differential signal S3 and the motion signal S11 of each of the pixels P1 and execute signal processing. The signal processing section 130a is a signal processing circuit. The signal processing section 130a may perform various kinds of signal processing by using the differential signal S3 and the motion signal S11. In the example illustrated in Fig. 3A, the signal processing section 130a includes a bit inversion part 60, an addition part 70a, and a memory part 75a.

The bit inversion part 60 is configured to invert a bit value of a received signal. In the example illustrated in Fig. 3A, the bit inversion part 60 receives the differential signal S3 from the counter part 30a. The bit inversion part 60 inverts a bit value of the differential signal S3. The bit inversion part 60 generates a signal (grayscale signal) based on a sum of the number of pulses of the signal S2a in the first period Ta and the number of pulses of the signal S2a in the second period Tb.

The grayscale signal S12 has, for example, a signal value obtained by adding the count value in the second period Tb to the count value in the first period Ta. The grayscale signal S12 is a signal indicating a grayscale. In other words, the bit inversion part 60 restores the grayscale signal S12 indicating a grayscale value of a pixel by using the differential signal S3. The bit inversion part 60 performs an inversion process on the differential signal S3 of each of the pixels P1 and generates the grayscale signal S12 of the pixel P1.

The addition part 70a and the memory part 75a receive the grayscale signal S12 of each of the pixels P1 from the bit inversion part 60. In addition, the addition part 70a and the memory part 75a receive the motion signal S11 of each of the pixels P1 from the determination part 40. The memory part 75a is configured to hold a signal of each of the pixels. The memory part 75a is a frame memory. The memory part 75a may store (record) the grayscale signals S12 and the motion signals S11 of each of the pixels in units of frames.

The addition part 70a is configured to perform a process of adding signals of pixels. The addition part 70a estimates a movement direction of a moving target by using, for example, the motion signal S11 of each of the pixels P1. The addition part 70a aligns the grayscale signals S12 of each of the pixels P1 with reference to the grayscale signals S12 held in the memory part 75a on the basis of a result of the estimation. The addition part 70a performs processes of adding and averaging the plurality of grayscale signals S12.

The addition part 70a is an averaging part. The addition part 70a averages the plurality of grayscale signals S12 as described above and generates the averaged grayscale signal S12. Performing a process of integrating the plurality of grayscale signals S12 makes it possible to improve an S/N ratio of the grayscale signal S12. In this way, the signal processing section 130a may acquire the motion signal S11, the grayscale signal S12, and the averaged grayscale signal S12 and output the motion signal S11, the grayscale signal S12, and the averaged grayscale signal S12 to the outside of the photodetector 1.

Fig. 3B illustrates the pixel P2 and the second circuit unit 140b. As illustrated in Fig. 3B, the photodetector 1 includes the pixel P2 and the second circuit unit 140b. The pixel P2 includes a light receiving element 10b. The second circuit unit 140b includes the pixel circuit section 120b and the signal processing section 130b. In the example illustrated in Fig. 3B, the pixel circuit section 120b includes a generation part 20b, a supply part 25b, a selection part 27, and a counter part 30b. For example, each pixel P2 or the plurality of pixels P2 is provided with the plurality of selection parts 27 and the plurality of counter parts 30b.

The light receiving element 10b, the generation part 20b, and the supply part 25b have configurations similar to those of the light receiving element 10b of the pixel P1, the generation part 20a, and the supply part 25a described above. The light receiving element 10b is configured to receive light and generate a signal. The light receiving element 10b is an SPAD element. The light receiving element 10b may convert an incident photon into electric charge and output a signal S1b that is an electric signal corresponding to the incident photon. It is to be noted that the light receiving element 10b is also referred to as a photoelectric conversion element (photoelectric conversion section) configured to photoelectrically convert light.

The generation part 20b is configured to generate a signal S2b based on the signal S1b generated by the light receiving element 10b. In the example illustrated in Fig. 3B, the generation part 20b includes an inverter. The generation part 20b may output the signal S2b to the selection part 27. The signal S2b is a pulse signal based on a voltage of the signal S1b generated by the light receiving element 10b. It is to be noted that the generation part 20b may include a buffer circuit, an AND circuit, and the like. The supply part 25b is a recharge part. The supply part 25b is configured to supply the light receiving element 10b with a voltage and a current.

The selection part 27 is configured to output the signal S2b from the generation part 20b to the counter part 30b selected from the plurality of counter parts 30b. The selection part 27 is a selection circuit (selector). The selection part 27 is configured to switch output destinations of the signals S2b. In other words, the selection part 27 distributes the signals S2b received from the plurality of generation parts 20b to the respective counter parts 30b. The selection part 27 may change the output destinations of the signals S2b in a time division manner (e.g., for each of subframes).

The counter part 30b is configured to perform counting in accordance with a received signal. The counter part 30b receives the signal S2b from the generation part 20b through the selection part 27. The signal S2b is a pulse signal. The counter part 30b counts pulses of the signal S2b and outputs a signal based on the number of pulses of the signal S2b. For example, the counter part 30b counts up the number of pulses of the signal S2b as a count value and outputs a signal S4 indicating the count value to the signal processing section 130b.

The signal processing section 130b is configured to acquire the signal S4 of each of the pixels P2 and execute signal processing. The signal processing section 130b is a signal processing circuit. The signal processing section 130b may perform various kinds of signal processing by using the signal S4. In the example illustrated in Fig. 3B, the signal processing section 130b includes a calculation part 65, an addition part 70b, and a memory part 75b.

The calculation part 65 is configured to perform signal processing on the signal S4. The calculation part 65 generates the signal (distance signal) related to the distance to the measurement target on the basis of the signal S4. According to the invention, in a case where the light source 220 irradiates the measurement target with light (e.g., laser light), each of the pixels P2 of the photodetector 1 receives the light reflected from the measurement target. The signal S4 generated for each of the pixels P2 is a signal corresponding to the distance to the measurement target.

According to the invention, the calculation part 65 estimates a phase difference between the irradiation light and the reflection light or a round-trip time of light, on the basis of the generated signal S4 of the pixel P2. The calculation part 65 calculates a distance between the photodetector 1 and the measurement target. The calculation part 65 calculates the distance to the measurement target on the basis of a time for light emitted from the light source 220 to be reflected by the measurement target and reach the photodetector 1. The calculation part 65 calculates the distance to the target for each of the pixels P2. The calculation part 65 generates a distance signal S13 related to the distance to the target. In this case, the calculation part 65 may perform a noise reduction process (e.g., such as a process of removing a signal component of background light) and generate the distance signal S13 of each of the pixels P2.

The addition part 70b and the memory part 75b receive the distance signal S13 of each of the pixels P2 from the calculation part 65. In addition, the addition part 70b and the memory part 75b receive the motion signal S11 of each of the pixels P1 from the signal processing section 130a (see Fig. 3A) of the first circuit unit 140a. The memory part 75b is configured to hold a signal of each of the pixels. The memory part 75b is a frame memory. The memory part 75b may store, for example, the distance signal S13 of each of the pixels in units of frames.

The addition part 70b is configured to perform a process of adding signals of pixels. The addition part 70b estimates a movement direction of a moving target by using, for example, the motion signal S11 of each of the pixels P1. The addition part 70b aligns the distance signals S13 of each of the pixels P2 with reference to the distance signals S13 held in the memory part 75b on the basis of a result of the estimation. The addition part 70b performs processes of adding and averaging the plurality of distance signals S13.

The addition part 70b is an averaging part. The addition part 70b averages the plurality of distance signals S13 as described above and generates the averaged distance signal S13. Performing a process of integrating the plurality of distance signals S13 makes it possible to improve an S/N ratio of the distance signal S13. In this way, the signal processing section 130b may acquire the distance signal S13 and the averaged distance signal S13 and output the distance signal S13 and the averaged distance signal S13 to the outside of the photodetector 1.

In addition, in the present embodiment, as illustrated in Fig. 3A, the first circuit unit 140a of the photodetector 1 includes a region detection part 81, a distance detection part 82, and a signal control part 90. The region detection part 81 is configured to detect a partial region of a region of the measurement target as a region of attention. For example, the region detection part 81 detects a region including a region of the moving target as the region of attention on the basis of the motion signal S11 of each of the pixels P1. The region detection part 81 generates a signal (region signal S15) related to the region of attention. The region detection part 81 may output the generated region signal S15 to the signal processing section 130b (see Fig. 3B) of the second circuit unit 140b. The region signal S15 is a signal indicating the region of interest (RoI).

The signal control part 90 is a signal control circuit. The signal control part 90 is configured to perform signal processing. The signal control part 90 is configured to control the operation of the light source controller 210 (see Fig. 1). The signal control part 90 generates a signal related, for example, to a light emission position, a light density, output power, and the like of the light source 220 on the basis of the region signal S15 outputted from the region detection part 81 and outputs the generated signal to the light source controller 210.

The signal control part 90 is configured to control light emission by the light source 220 by supplying the light source controller 210 with a control signal corresponding to the region signal S15 and cause the light source 220 to emit light for the region of attention. The signal control part 90 may control the light emission position, the light density, the output power, and the like of the light source 220 in accordance with the region signal S15. This makes it possible to perform accurate measurement for the region of attention.

For example, in a case where the determination part 40 detects the occurrence of an event, the region detection part 81 determines a region including a region in which the event occurs as the region of attention by using the motion signal S11. The region detection part 81 generates the region signal S15 indicating the region of attention. The signal control part 90 outputs a control signal to the light source controller 210 in accordance with the region signal S15. The signal control part 90 adjusts the light emission position, the light density, the output power, and the like of the light source 220 to guide an amount of light to be used for measurement to the region of attention. The photodetector 1 detects light and it is possible to acquire the grayscale signal S12, the motion signal S11, and the distance signal S13 for the region of attention.

After the light source 220 emits light in accordance with the region signal S15, the calculation part 65 of the signal processing section 130b generates the distance signal S13 of each of the pixels P2 by using the signal S4 of the pixel P2 in accordance with the region signal S15 received from the signal processing section 130a. In this case, the calculation part 65 may generate the distance signal S13 of each of the pixels P2 that has received the reflection light from the region of attention indicated by the region signal S15. The calculation part 65 may output the generated distance signal S13 to the distance detection part 82 of the signal processing section 130a. The distance detection part 82 receives the distance signal S13 of each of the plurality of pixels P2 corresponding to the region of attention from the calculation part 65 of the signal processing section 130b.

The distance detection part 82 is configured to detect a distance to the region of attention on the basis of the distance signal S13 of each of the pixels P2. The distance detection part 82 extracts the distance to the region of attention by using the distance signal S13 of each of the pixels P2 generated by the calculation part 65. The distance detection part 82 generates a signal (distance signal S16) related to the extracted distance to the region of attention. The distance detection part 82 may output the generated distance signal S16 to the signal control part 90 or the like.

The signal control part 90 generates a control signal related to the light emission position, the light density, the output power, and the like of the light source 220 on the basis of the distance signal S16 outputted from the distance detection part 82 and outputs the generated control signal to the light source controller 210. The signal control part 90 may supply a control signal corresponding to the distance signal S16 to the light source controller 210. The light source controller 210 may change the light emission position, the light density, and the like of the light source 220 to cause the light source 220 to perform light emission appropriate for measurement for the region of attention. This allows the photodetector 1 to accurately perform measurement for the region of attention.

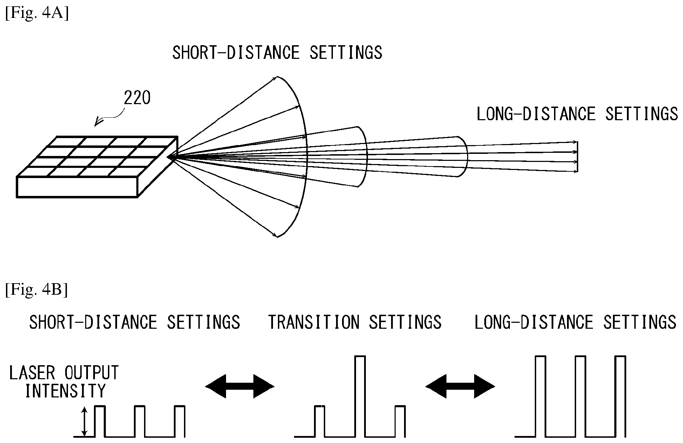

The signal control part 90 may change the control over the light source 220 by the light source controller 210 in accordance with the distance to the region of attention indicated by the distance signal S16. As illustrated in Fig. 4A, in a case where the distance to the region of attention from the light source 220 (or the photodetector 1) is short, the signal control part 90 may control the light source controller 210 and the light source 220 to achieve a wide field of view (FOV), a low light density, and low output power as short-distance settings.

In addition, as illustrated in Fig. 4A, in a case where the distance to the region of attention from the light source 220 is long, the signal control part 90 may control the light source controller 210 and the light source 220 to achieve narrow FOV, a high light density, and high output power as long-distance settings. This makes it possible to accurately measure the distance to the region of attention even in a case where the distance is long. It is to be noted that the signal control part 90 may gradually change the output power (laser output intensity) as schematically illustrated in Fig. 4B in a case where the signal control part 90 switches on the short-distance settings or the long-distance settings. In addition, the signal control part 90 may change the light density, the FOV, and the like step by step. This makes it possible to effectively suppress occurrence of erroneous detection of the distance.

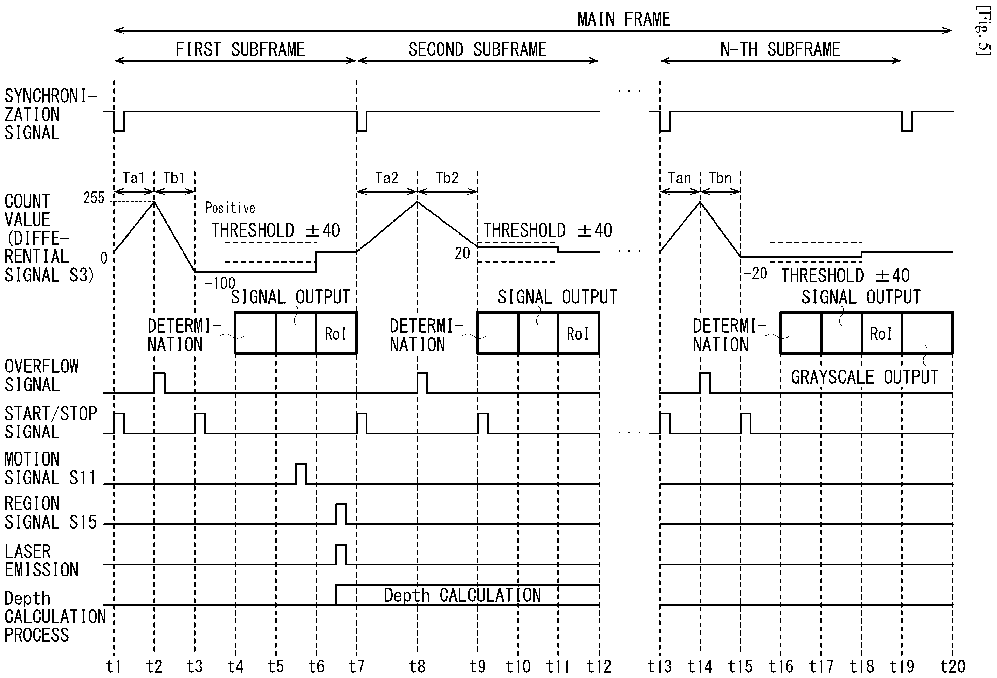

Fig. 5 is a timing chart illustrating an operation example of the photodetection system according to the embodiment. Fig. 5 schematically illustrates the synchronization signal, the count value of the counter part 30a, the overflow signal, the start/stop signal, the motion signal S11, the region signal S15, and the like on the same time axis. The synchronization signal is generated, for example, on the basis of an imaging frame rate. The synchronization signal indicates a time interval of a subframe in a main frame. The control part 35 of the first circuit unit 140a generates the start signal in synchronization with the synchronization signal. The control part 35 outputs the start signal to the counter part 30a.

Fig. 5 illustrates an example of a case where the counter part 30a is an 8-bit up-down counter circuit. A period from a time t1 to a time t2, a period from a time t7 to a time t8, and a period from a time t13 to a time t14 are the first periods Ta (a first period Ta1 to a first period Tan in Fig. 5) described above. In each of these periods, the counter part 30a counts up the number of pulses of the signal S2a.

A period from the time t2 to a time t3, a period from the time t8 to a time t9, and a period from the time t14 to a time t15 are the second periods Tb (a second period Tb1 to a second period Tbn in Fig. 5) described above. In each of these periods, the counter part 30a counts down the number of pulses of the signal S2a. In Fig. 5, the first period Ta1 and the second period Tb1 have the same time interval. In addition, a first period Ta2 and a second period Tb2 have the same time interval. The first period Tan and the second period Tbn also have the same time interval.

At the time t1 in a first subframe, the counter part 30a starts to count up the pulses of the signal S2a in accordance with the start signal received from the control part 35. In a case where the count value reaches "255", which is a reference value, at the time t2, the counter part 30a outputs the overflow signal to the control part 35. In addition, "255" is set as the initial value for down-counting. The overflow signal serves as a signal indicating timings of an end of the first period Ta1 and a start of the second period Tb1.

At the time t2, the counter part 30a starts to count down the pulses of the signal S2a. The control part 35 learns the length of the first period Ta1 on the basis of the start signal and the overflow signal. The control part 35 generates the stop signal and supplies the stop signal to the counter part 30a to equalize the length of the second period Tb1 to the length of the first period Ta1.

At the time t3, the counter part 30a finishes counting down the pulses of the signal S2a in accordance with the stop signal received from the control part 35. The counter part 30a outputs the differential signal S3 indicating a count value " - 100", which is a difference value between the count value obtained by counting up the pulses in the first period Ta1 and the count value obtained by counting down the pulses in the second period Tb1.

In a period from a time t4 to a time t5, the determination part 40 compares " - 100" and "±40". " - 100" is a value of the differential signal S3. "±40" is a threshold. The first threshold determination portion 41 determines that the signal value " - 100" of the differential signal S3 is lower than the first threshold " - 40" and detects that the motion of the measurement target causes a positive event to occur. It is to be noted that the signal value " - 100" of the differential signal S3 does not exceed the second threshold "+40". The second threshold determination portion 42 thus determines that no negative event occurs.

In a period from the time t5 to a time t6, the determination part 40 generates the motion signal S11 indicating the signal value of the differential signal S3 and the occurrence of a positive event in accordance with the results of the determinations made by the first threshold determination portion 41 and the second threshold determination portion 42. The bit inversion part 60 of the signal processing section 130a performs the inversion process on the bit value of the differential signal S3 and generates the grayscale signal S12. The signal processing section 130a outputs the motion signal S11 of each of the pixels P1 generated in the first subframe to the outside. In addition, the signal processing section 130a may output the grayscale signal S12 of each of the pixels P1 generated in the first subframe to the outside. The signal processing section 130a causes the memory part 75a to hold the grayscale signal S12 and the motion signal S11 of each of the pixels P1 in the first subframe.

In a period from the time t6 to the time t7, the region detection part 81 determines the region of interest (RoI) or the region of attention on the basis of the motion signal S11 of each of the pixels P1. The region detection part 81 generates the region signal S15 indicating the region of attention. The signal control part 90 supplies the light source controller 210 with the control signal in accordance with the region signal S15 and controls the light emission position, the light density, the output power, and the like of the light source 220.

In a case where the light source 220 emits light for the region of attention, the calculation part 65 of the signal processing section 130b performs a process (Depth calculation process) of calculating the distance to the region of attention by using the signal S4 obtained from each of the pixels P2. The calculation part 65 may generate the distance signal S13 of each of the pixels P2 and output the generated distance signal S13.

At the time t7 in a second subframe, the count value of the counter part 30a is reset. The counter part 30a starts to count up the pulses of the signal S2a in accordance with the start signal. In a case where the count value reaches the reference value "255" at the time t8, the counter part 30a outputs the overflow signal to the control part 35. "255" is set as the initial value for down-counting.

At the time t8, the counter part 30a starts to count down the pulses of the signal S2a. The control part 35 learns the length of the first period Ta2 by using the overflow signal. The control part 35 generates the stop signal and supplies the stop signal to the counter part 30a to equalize the length of the second period Tb2 to the length of the first period Ta2.

At the time t9, the counter part 30a finishes counting down the pulses of the signal S2a in accordance with the stop signal. The counter part 30a outputs the differential signal S3 indicating a difference value "+20" between the count value in the first period Ta2 and the count value in the second period Tb2.

In a period from the time t9 to a time t10, the determination part 40 compares a value "+20" of the differential signal S3 and the threshold "±40". The first threshold determination portion 41 and the second threshold determination portion 42 each determine that the value of the differential signal S3 falls within the threshold and determine that no positive event or no negative event occurs.

In a period from the time t10 to a time t12, the determination part 40 generates the motion signal S11 indicating the signal value of the differential signal S3 and indicating that no event occurs. The bit inversion part 60 performs the inversion process on the bit value of the differential signal S3 and generates the grayscale signal S12. The signal processing section 130a outputs the motion signal S11 of each of the pixels P1 generated in the second subframe to the outside. The signal processing section 130a may also output the grayscale signal S12 of each of the pixels P1 generated in the second subframe to the outside. In addition, the signal processing section 130a causes the memory part 75a to hold the grayscale signal S12 and the motion signal S11 of each of the pixels P1 in the second subframe.

At the time t13 in an N-th subframe illustrated in Fig. 5, the count value of the counter part 30a is reset. After that, the counter part 30a starts to count up the pulses of the signal S2a in accordance with the start signal. In a case where the count value reaches the reference value "255" at the time t14, the counter part 30a outputs the overflow signal to the control part 35. "255" is set as the initial value for down-counting.

At the time t14, the counter part 30a starts to count down the pulses of the signal S2a. The control part 35 learns the length of the first period Tan by using the overflow signal. The control part 35 supplies the stop signal to the counter part 30a to equalize the length of the second period Tbn to the length of the first period Tan.

At the time t15, the counter part 30a finishes counting down the pulses of the signal S2a in accordance with the stop signal. The counter part 30a outputs the differential signal S3 indicating a difference value " - 20" between the count value in the first period Tan and the count value in the second period Tbn.

In a period from the time t16 to a time t17, the determination part 40 compares the value " - 20" of the differential signal S3 and the threshold "±40". The first threshold determination portion 41 and the second threshold determination portion 42 each determine that the value of the differential signal S3 falls within the threshold and determine that no positive event or no negative event occurs.

In a period from the time t17 to a time t18, the determination part 40 generates the motion signal S11 indicating the signal value of the differential signal S3 and indicating that no event occurs. The bit inversion part 60 performs the inversion process on the bit value of the differential signal S3 and generates the grayscale signal S12. The signal processing section 130a outputs the motion signal S11 of each of the pixels P1 generated in the N-th subframe to the outside. The signal processing section 130a may also output the grayscale signal S12 of each of the pixels P1 generated in the N-th subframe to the outside. In addition, the signal processing section 130a causes the memory part 75a to hold the grayscale signal S12 and the motion signal S11 of each of the pixels P1 in the N-th subframe.

In a period from the time t19 to a time t20, the addition part 70a of the signal processing section 130a calculates the movement direction of the moving target by using the motion signals S11 in the respective subframes held in the memory part 75a. The addition part 70a aligns the grayscale signals S12 of each of the pixels P1 in a plurality of subframes in accordance with movement of the target and adds and averages the grayscale signals S12 in the respective subframes. The signal processing section 130a may output the grayscale signal S12 averaged by the addition part 70a to the outside.

In this way, the photodetector 1 according to the present embodiment includes the first circuit unit 140a and the second circuit unit 140b. The first circuit unit 140a is configured to output the motion signal S11 and the grayscale signal S12. The second circuit unit 140b is configured to output the distance signal S13. It is possible to obtain the motion signal and the grayscale signal, and the distance signal and achieve the photodetector having high detection performance.

In addition, in the present embodiment, a SPAD element is used as the light receiving element. This makes it possible to suppress a decrease in detection accuracy in a case of measurement at low illuminance and low contrast. It is possible to accurately detect the motion of the measurement target, and output the grayscale value and measure the distance. In addition, a process of averaging signals makes it possible to improve the S/ N ratio and obtain the grayscale signal and the distance signal with less noise.

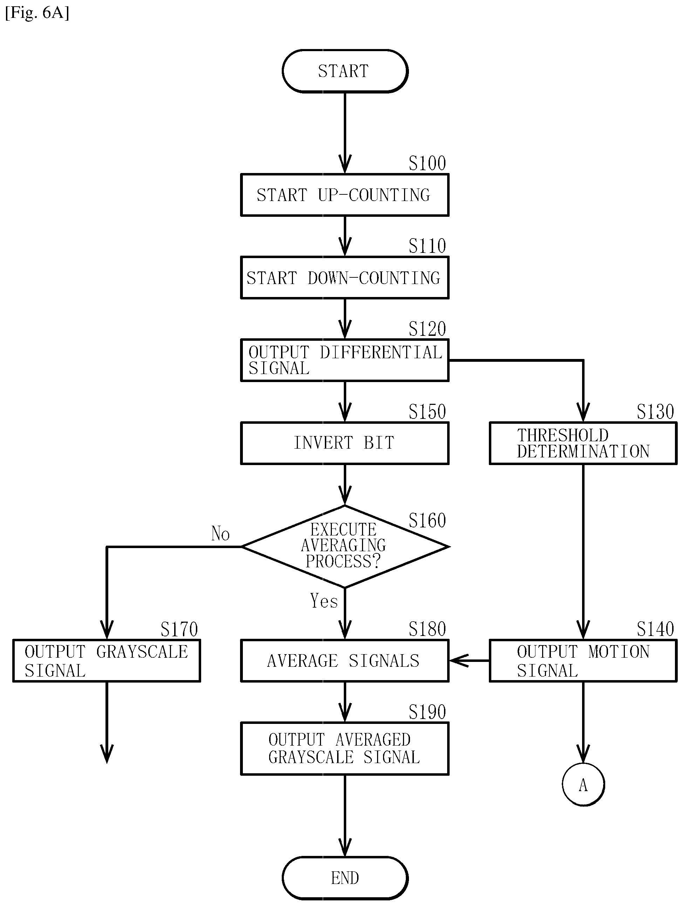

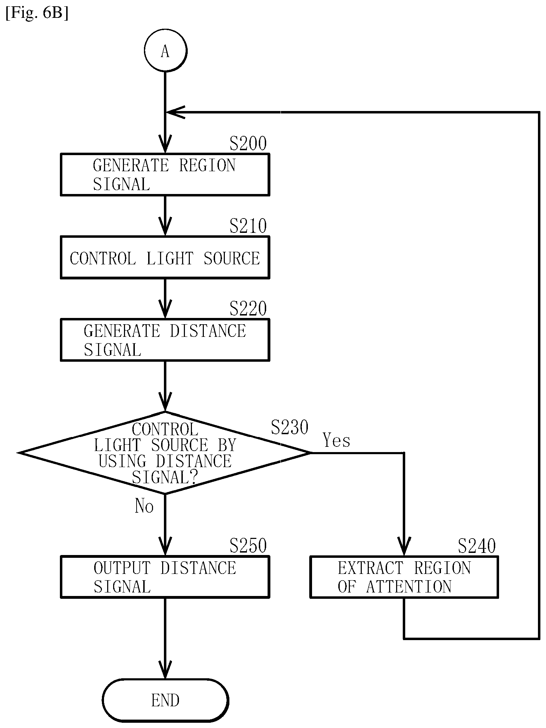

Figs. 6A and 6B are flowcharts each illustrating an operation example of the photodetection system according to the embodiment. The operation example of the photodetection system 200 is described with reference to this flowchart of any of Figs. 6A and 6B.

In step S100 illustrated in Fig. 6A, the count value of the counter part 30a is reset in accordance with the start signal from the control part 35. The counter part 30a starts to count up the pulses of the signal S2a generated in response to reception of a photon. In a case where the count value reaches the reference value (e.g., a full code value "255"), the counter part 30a outputs the overflow signal to the control part 35. In step S110, the counter part 30a starts to count down the pulses of the signal S2a.

In step S120, the counter part 30a stops counting down the pulses in accordance with the stop signal from the control part 35. The counter part 30a outputs the differential signal S3 indicating a count result to the determination part 40 and the signal processing section 130a.

In step S130, the determination part 40 compares the signal value of the differential signal S3 and the threshold to determine the presence or absence of the occurrence of an event. In step S140, the determination part 40 outputs, to the signal processing section 130a, the motion signal S11 indicating the signal value of the differential signal S3 and the presence or absence of the occurrence of an event in accordance with a result of the determination. In addition, the determination part 40 outputs the motion signal S11 to the outside of the photodetector 1.

In step S150, the bit inversion part 60 performs the bit inversion process on the differential signal S3 to generate the grayscale signal S12. In step S160, the signal processing section 130a learns whether or not to execute the process of averaging the grayscale signals S12. In a case where the averaging process is not performed ("No" in step S160), the process proceeds to step S170. In step S170, the signal processing section 130a outputs the grayscale signal S12 of each of the pixels P1 to the outside of the photodetector 1. The grayscale signal S12 is generated by the bit inversion part 60.

In a case where the averaging process is performed ("Yes" in step S160), the process proceeds to step S180. It is to be noted that presence or absence of the averaging process may be automatically set by the photodetector 1 or may be designated by a user.

In step S180, the addition part 70a shifts and adds and averages the grayscale signals S12 of each of the pixels P1 in the respective frames held in the memory part 75a in accordance with the movement direction of the target obtained from the motion signal S11. In step S190, the signal processing section 130a may output the grayscale signal S12 averaged by the addition part 70a to the outside.

After step S140 described above, the process also proceeds to step S200 illustrated in Fig. 6B. In step S200, the region detection part 81 of the signal processing section 130a generates the region signal S15 indicating the region of attention on the basis of the motion signal S11 of each of the pixels P1. In step S210, the signal control part 90 outputs the control signal to the light source controller 210 in accordance with the region signal S15 and controls the light emission position and the like of the light source 220.

In step S220, the calculation part 65 of the signal processing section 130b generates the distance signal S13 indicating the distance to the region of attention on the basis of the signal S4 of each of the pixels P2. In step S230, the signal processing section 130a learns whether or not to control the light source 220 by using the distance signal S13. In a case where the light source 220 is controlled ("Yes" in step S230), the process proceeds to step S240. It is to be noted that presence or absence of execution of the control over the light source by using the distance signal S13 may be automatically set or may be designated by a user.

In step S240, the distance detection part 82 extracts the region of attention by using the distance signal S13 of each of the pixels P2. The distance detection part 82 generates the distance signal S16 indicating the distance to the region of attention. The signal control part 90 outputs the control signal to the light source controller 210 in accordance with the distance signal S16 and controls the light emission position and the like of the light source 220. After step S240, the processes from step S200 to step S220 are executed again.

In a case of "No" in step S230, the process proceeds to step S250. In other words, in a case where the light source 220 is not controlled, the process proceeds to step S250. In step S250, the signal processing section 130b may output the distance signal S13 of each of the pixels P2 to the outside of the photodetector 1. After step S250, the photodetection system 200 finishes the processes illustrated in the flowchart.

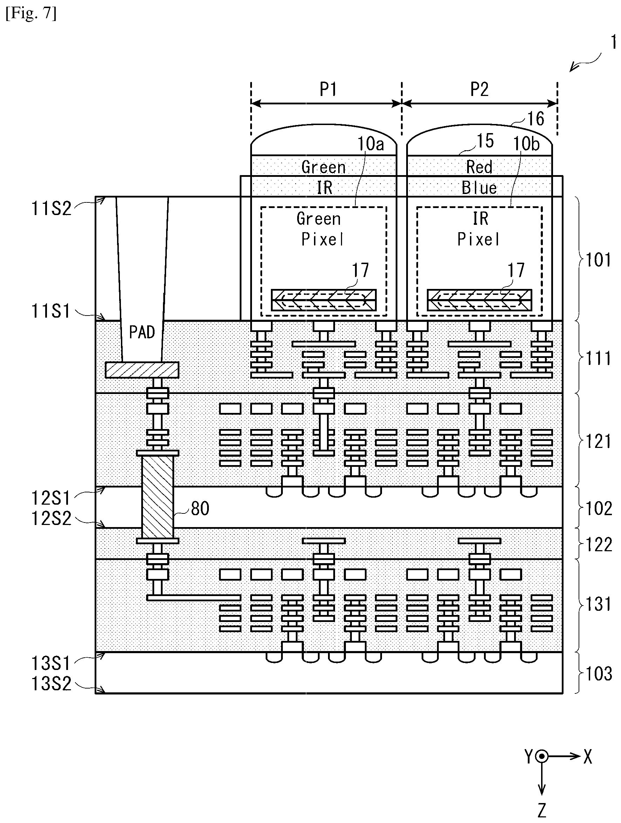

Fig. 7 is a schematic diagram illustrating an example of a cross-sectional configuration of the photodetector according to the embodiment. The photodetector 1 has a configuration in which the first substrate 101, the second substrate 102, and the third substrate 103 are stacked in the Z axis direction. The first substrate 101, the second substrate 102, and the third substrate 103 each include a semiconductor substrate (e.g., a silicon substrate).

As illustrated in Fig. 7, the first substrate 101, the second substrate 102, and the third substrate 103 respectively have first surfaces 11S1, 12S1, and 13S1 and second surfaces 11S2, 12S2, and 13S2. The first surfaces 11S1, 12S1, and 13S1 are provided with transistors. Each of the first surfaces 11S1, 12S1, and 13S1 is an element formation surface on which an element such as a transistor is formed. Each of the first surfaces 11S1, 12S1, and 13S1 is provided with a gate electrode, a gate oxide film, and the like.

The first substrate 101 is provided with the plurality of pixels P1 and P2 respectively including the light receiving elements 10a and 10b. As schematically illustrated in Fig. 7, the pixel P1 and the pixel P2 each include a multiplication section 17 (multiplication region) configured to perform avalanche multiplication. A lens section 16, the filter 15, and the like are provided for each of the pixels P on the second surface 11S2 side of the first substrate 101. The lens section 16 condenses light. Fig. 7 illustrates the pixel P1 and the pixel P2. The pixel P1 is the G pixel including a green color filter and a filter (IR-Cut filter) that blocks infrared light. The pixel P2 is the IR pixel including a red color filter and a blue color filter.

As illustrated in Fig. 7, the first surface 11S1 of the first substrate 101 is provided with a wiring layer 111. In addition, the first surface 12S1 of the second substrate 102 is provided with a wiring layer 121. The second surface 12S2 of the second substrate 102 is provided with a wiring layer 122. The first surface 13S1 of the third substrate 103 is provided with a wiring layer 131. Each of the wiring layers 111, 121, 122, and 131 includes, for example, a conductor film and an insulating film. Each of the wiring layers 111, 121, 122, and 131 includes a plurality of wiring lines, vias, and the like. Each of the wiring layers 111, 121, 122, and 131 includes, for example, two or more layers of wiring lines.

Each of the wiring layers 111, 121, 122, and 131 has a configuration in which a plurality of wiring lines is stacked, for example, with an interlayer insulating layer (interlayer insulating film) interposed in between. Each of the wiring layers is formed by using aluminum (Al), copper (Cu), tungsten (W), polysilicon (Poly-Si), or the like. In one example, each of the interlayer insulating layers is formed by using a monolayer film including one of silicon oxide (SiO), silicon nitride (SiN), silicon oxynitride (SiON), or the like, or a stacked film including two or more thereof.

It is to be noted that the first substrate 101 and the wiring layer 111 may be sometimes referred to collectively as the first substrate 101 (or a first circuit layer). In addition, the second substrate 102 and the wiring layers 121 and 122 may be sometimes referred to collectively as the second substrate 102 (or a second circuit layer). The third substrate 103 and the wiring layer 131 may be sometimes referred to collectively as the third substrate 103 (or a third circuit layer).

In the example illustrated in Fig. 7, the first substrate 101 and the second substrate 102 are stacked by joining electrodes with the first surface 11S1 and the first surface 12S1 opposed to each other. Elements such as transistors are formed on the first surface 11S1 and the first surface 12S1. In other words, the first substrate 101 and the second substrate 102 are joined with the respective front surfaces opposed to each other. The second substrate 102 and the third substrate 103 are stacked by joining electrodes with the second surface 12S2 and the first surface 13S1 opposed to each other. Elements such as transistors are formed on the first surface 13S1. In other words, the second substrate 102 and the third substrate 103 are joined with the back surface of the second substrate 102 and the front surface of the third substrate 103 opposed to each other.

In one example, the first substrate 101 and the second substrate 102 are bonded together by joining metal electrodes each including copper (Cu). In other words, the first substrate 101 and the second substrate 102 are bonded together by forming a Cu-Cu junction. In addition, the second substrate 102 and the third substrate 103 are also bonded together by forming, for example, a Cu-Cu junction. It is to be noted that the electrodes used for junction may include, for example, a metal material such as nickel (Ni), cobalt (Co), or tin (Sn) other than copper (Cu). Alternatively, the electrodes may include another material.

The second substrate 102 and the wiring layers 121 and 122 include a plurality of through electrodes 80. Each of the through electrodes 80 is an electrode that penetrates the second substrate 102. The through electrode 80 is formed to extend in the Z axis direction and reach inside of the wiring layer 122 of the second substrate 102. The through electrode 80 includes, for example, tungsten (W), aluminum (Al), cobalt (Co), molybdenum (Mo), ruthenium (Ru), or the like. The through electrode 80 electrically couples a circuit provided on the first surface 12S1 side of the second substrate 102 and a circuit provided on the first surface 13S1 side of the third substrate 103.

The first substrate 101 is provided with a pad (PAD). The pad is an electrode formed by using, for example, aluminum (Al). It is to be noted that the pad may include another metal material. A plurality of pads is disposed in the photodetector 1. Each of the pads may supply, for example, a power supply voltage inputted from the outside to the respective circuits of the first substrate 101 to the third substrate 103.

### <Workings and Effects>

A photodetector (photodetector 1) according to the present embodiment includes: a plurality of first pixels (pixels P1); a first circuit unit (first circuit unit 140a); a plurality of second pixels (pixels P2); and a second circuit unit (second circuit unit 140b). The plurality of first pixels each includes a first light receiving element configured to receive light and output a first photocurrent. The first circuit unit is configured to acquire a signal based on the first photocurrent and output a first signal (motion signal S11) related to a motion of a target and a second signal (grayscale signal S12) related to a grayscale value. The plurality of second pixels each includes a second light receiving element configured to receive light and output a second photocurrent. The second circuit unit is configured to acquire a signal based on the second photocurrent and output a third signal (distance signal S13) related to a distance to the target.

The photodetector 1 according to the present embodiment includes the first circuit unit 140a and the second circuit unit 140b. The first circuit unit 140a is configured to output the motion signal S11 and the grayscale signal S12. The second circuit unit 140b is configured to output the distance signal S13. This makes it possible to obtain the motion signal, the grayscale signal, and the distance signal of each of the pixels P. It is possible to achieve the photodetector having high detection performance.

Next, modification examples of the present disclosure are described. The following assigns the same signs to components similar to those of the embodiment described above and omits descriptions thereof as appropriate.

### (1-1. Modification Example 1)

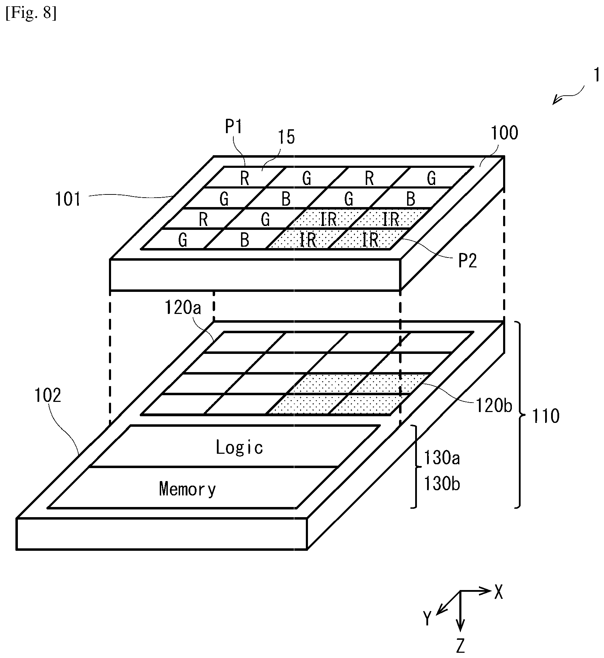

In the embodiment described above, the configuration example of the photodetector 1 has been described, but the photodetector 1 may have a configuration in which two substrates are stacked. Fig. 8 is a diagram illustrating a configuration example of a photodetector according to a modification example 1. The photodetector 1 has a configuration (two-layer configuration) in which the first substrate 101 and the second substrate 102 are stacked in the Z axis direction. In this case, for example, the pixel circuit sections 120a and 120b and the signal processing sections 130a and 130b may be provided in the second substrate 102.

### (1-2. Modification Example 2)

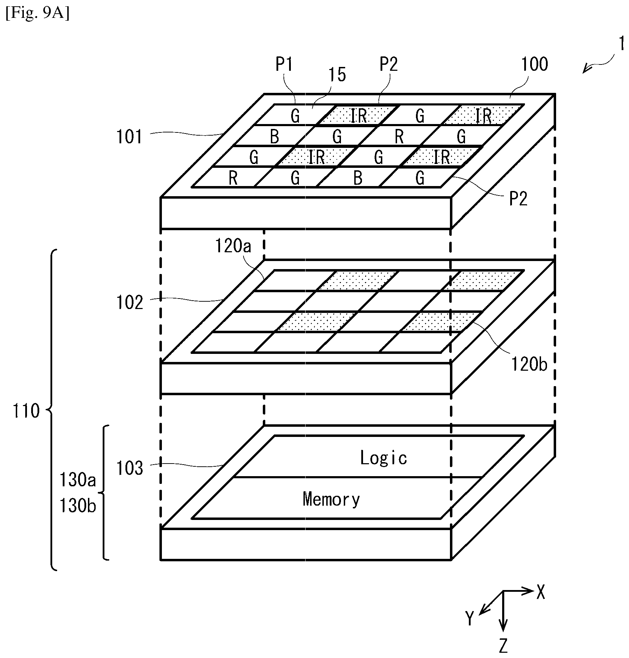

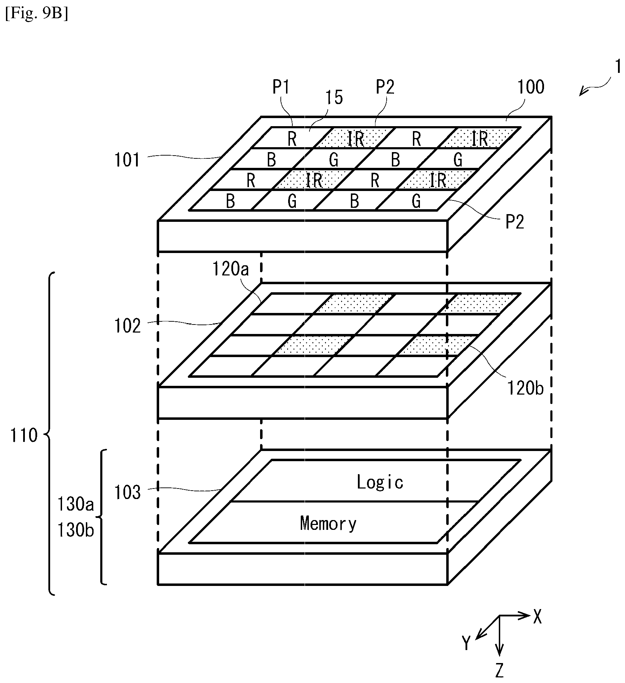

In the embodiment and the modification example described above, the disposition examples of the pixels P1 and the pixels P2 have been described, but the disposition of the pixels is not limited to these. For example, the pixels P1 and the pixels P2 may be disposed as in the example illustrated in Fig. 9A or 9B. In the example illustrated in Fig. 9A or 9B, the pixels P1 and the pixels P2 are alternately disposed in the pixel unit 100. The pixels P2 are the IR pixels.

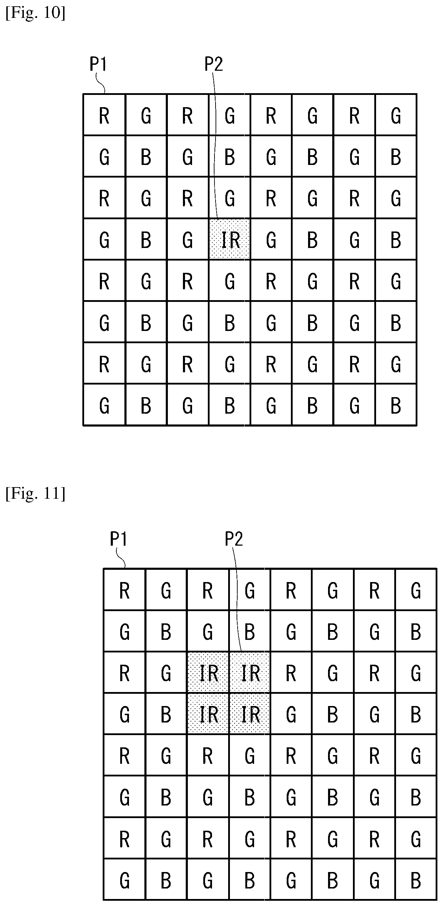

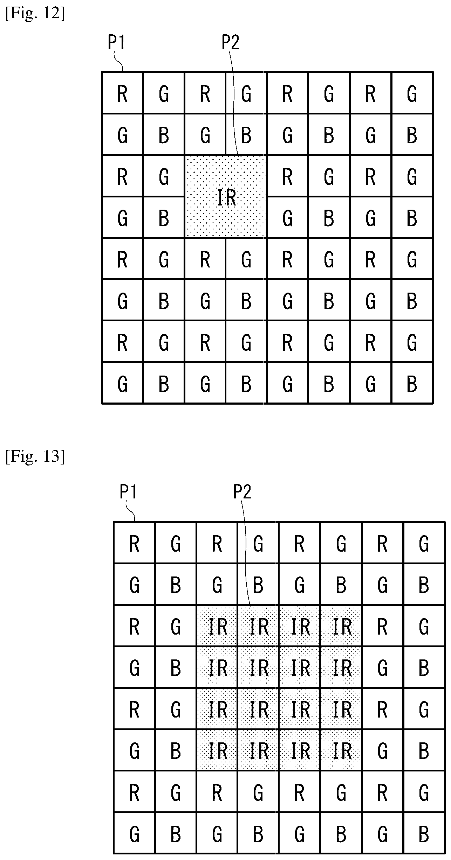

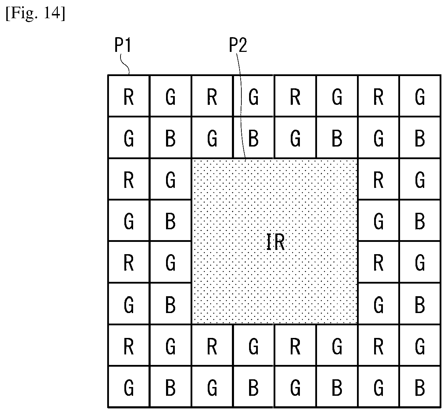

The size of the pixel P2, the number of pixels P2, and the like are not limited to the illustrated examples. The size of the pixel P2, the number of pixels P2, and the like are changeable as appropriate. Figs. 10 to 14 are diagrams each illustrating a disposition example of a pixel of a photodetector according to a modification example 2. As illustrated in Fig. 10, the pixel P1 and the pixel P2 may both have the same size. In the pixel unit 100, pixel blocks each including the plurality of pixels P2 may be repeatedly disposed. As illustrated in Fig. 11, a pixel block including the 2 × 2 pixels P2 (i.e., the four pixels P2 in total) may be disposed. It is to be noted that the pixel P2 may have a size corresponding to the four pixels P1 as illustrated in Fig. 12. In addition, for example, as illustrated in Fig. 13, a pixel block including the 4 × 4 pixels P2 (i.e., the 16 pixels P2 in total) may be disposed in the pixel unit 100. It is to be noted that the pixel P2 may have a size corresponding to the 16 pixels P1 as illustrated in Fig. 14.

### (1-3. Modification Example 3)

In the embodiment described above, the example has been described in which counting is started in synchronization with the synchronization signal. However, the photodetector 1 may start counting by using the start signal asynchronous to the synchronization signal. The photodetector 1 makes it possible to perform a high-speed operation as compared with a case where the photodetector 1 controls a timing of the count operation in synchronization with the synchronization signal.

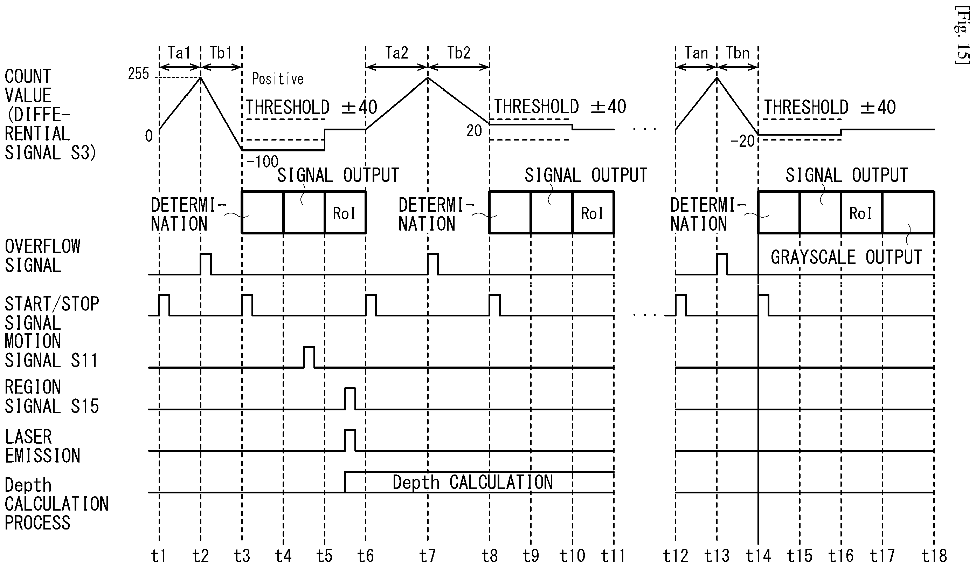

Fig. 15 is a timing chart illustrating an operation example of a photodetection system according to a modification example 3. In the example illustrated in Fig. 15, the control part 35 of the photodetector 1 may supply the start signal to the counter part 30a out of synchronization with the synchronization signal. This makes it possible to decrease a time (such as a period from the time t3 to the time t6 illustrated in Fig. 15) from an end timing of the count operation to a start timing of a next count operation as compared with a synchronization operation in Fig. 5 described above. This makes it possible to detect the motion signal, the grayscale signal, and the distance signal at high speed.

### (1-4. Modification Example 4)

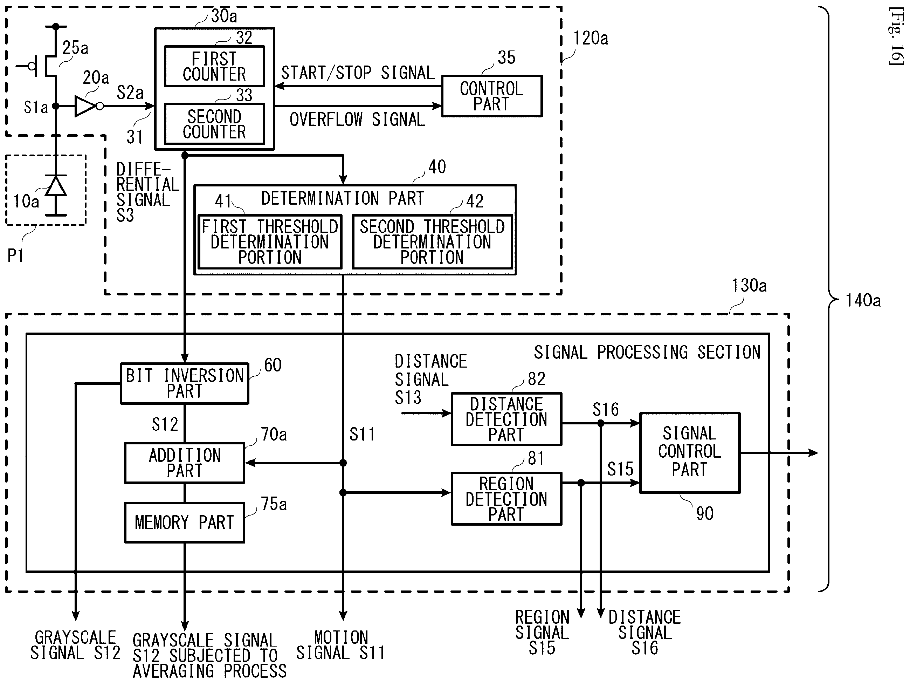

Fig. 16 is a diagram illustrating a configuration example of a photodetector according to a modification example 4. Fig. 16 illustrates configuration examples of the pixel P1 and the first circuit unit 140a. The counter part 30a may include a first counter 32 and a second counter 33 that are each configured to count the signal S2a received by the input portion 31. For example, the first counter 32 is configured to count the number of pulses of the signal S2a in the first period Ta. In addition, the second counter 33 is configured to count the number of pulses of the signal S2a in the second period Tb. The counter part 30a generates and outputs the differential signal S3 based on the difference between the count value of the first counter 32 and the count value of the second counter 33. In the present modification example, it is also possible to obtain the effect according to the embodiment described above.

### <3. Usage Examples>

For example, the photodetector 1 described above is usable in a variety of cases of sensing light such as visible light, infrared light, ultraviolet light, or X-rays as follows.
- Apparatuses that shoot images for viewing such as digital cameras or mobile apparatuses each having a camera function
- Apparatuses for traffic use such as onboard sensors that shoot images of the front, back, surroundings, inside, and so on of an automobile for safe driving such as automatic stop and for recognition of a driver's state, monitoring cameras that monitor traveling vehicles and roads, and distance measurement sensors that measure vehicle-to-vehicle distance
- Apparatuses for use in home electrical appliances such as televisions, refrigerators, or air-conditioners to shoot images of a user's gesture and bring the appliances into operation in accordance with the gesture
- Apparatuses for medical care and health care use such as endoscopes or apparatuses that shoot images of blood vessels by receiving infrared light
- Apparatuses for security use such as monitoring cameras for crime prevention or cameras for individual authentication
- Apparatuses for beauty use such as skin measurement apparatuses that shoot images of skin and microscopes that shoot images of scalp
- Apparatuses for sports use such as action cameras or wearable cameras for sports applications and the like
- Apparatuses for agricultural use such as cameras for monitoring the conditions of fields and crops

### <4. Practical Application Examples>

### (Example of Practical Application to Mobile Body)

The technology (the present technology) according to an embodiment the present disclosure is applicable to a variety of products. For example, the technology according to an embodiment of the present disclosure may be achieved as a device mounted on any type of mobile body such as an automobile, an electric vehicle, a hybrid electric vehicle, a motorcycle, a bicycle, a personal mobility, an airplane, a drone, a vessel, or a robot.

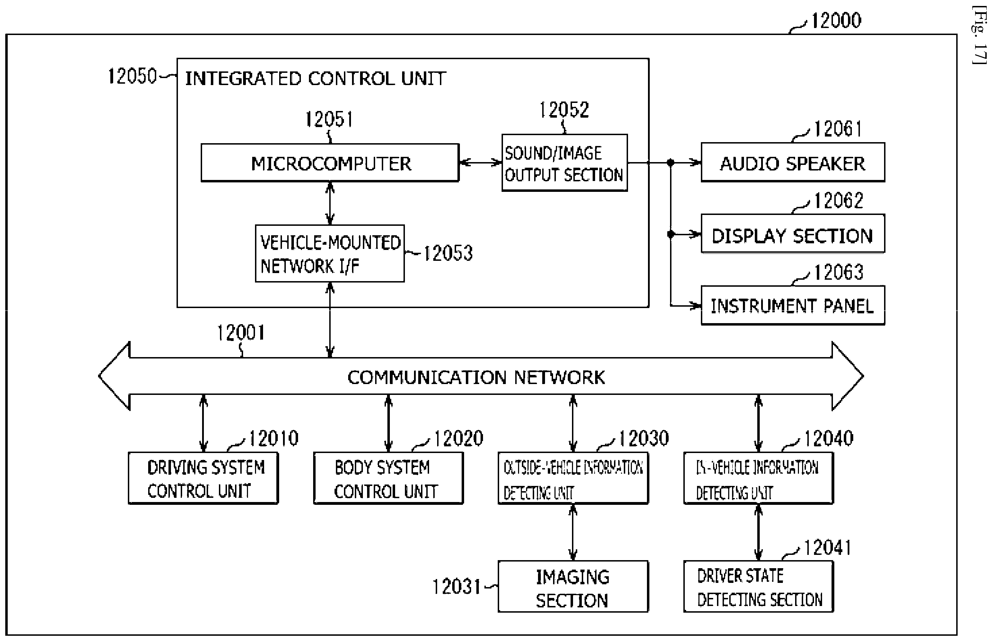

Fig. 17 is a block diagram depicting an example of schematic configuration of a vehicle control system as an example of a mobile body control system to which the technology according to an embodiment of the present disclosure can be applied.

The vehicle control system 12000 includes a plurality of electronic control units connected to each other via a communication network 12001. In the example depicted in Fig. 17, the vehicle control system 12000 includes a driving system control unit 12010, a body system control unit 12020, an outside-vehicle information detecting unit 12030, an in-vehicle information detecting unit 12040, and an integrated control unit 12050. In addition, a microcomputer 12051, a sound/image output section 12052, and a vehicle-mounted network interface (I/F) 12053 are illustrated as a functional configuration of the integrated control unit 12050.

The driving system control unit 12010 controls the operation of devices related to the driving system of the vehicle in accordance with various kinds of programs. For example, the driving system control unit 12010 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like.

The body system control unit 12020 controls the operation of various kinds of devices provided to a vehicle body in accordance with various kinds of programs. For example, the body system control unit 12020 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 12020. The body system control unit 12020 receives these input radio waves or signals, and controls a door lock device, the power window device, the lamps, or the like of the vehicle.

The outside-vehicle information detecting unit 12030 detects information about the outside of the vehicle including the vehicle control system 12000. For example, the outside-vehicle information detecting unit 12030 is connected with an imaging section 12031. The outside-vehicle information detecting unit 12030 makes the imaging section 12031 image an image of the outside of the vehicle, and receives the imaged image. On the basis of the received image, the outside-vehicle information detecting unit 12030 may perform processing of detecting an object such as a human, a vehicle, an obstacle, a sign, a character on a road surface, or the like, or processing of detecting a distance thereto.

The imaging section 12031 is an optical sensor that receives light, and which outputs an electric signal corresponding to a received light amount of the light. The imaging section 12031 can output the electric signal as an image, or can output the electric signal as information about a measured distance. In addition, the light received by the imaging section 12031 may be visible light, or may be invisible light such as infrared rays or the like.

The in-vehicle information detecting unit 12040 detects information about the inside of the vehicle. The in-vehicle information detecting unit 12040 is, for example, connected with a driver state detecting section 12041 that detects the state of a driver. The driver state detecting section 12041, for example, includes a camera that images the driver. On the basis of detection information input from the driver state detecting section 12041, the in-vehicle information detecting unit 12040 may calculate a degree of fatigue of the driver or a degree of concentration of the driver, or may determine whether the driver is dozing.

The microcomputer 12051 can calculate a control target value for the driving force generating device, the steering mechanism, or the braking device on the basis of the information about the inside or outside of the vehicle which information is obtained by the outside-vehicle information detecting unit 12030 or the in-vehicle information detecting unit 12040, and output a control command to the driving system control unit 12010. For example, the microcomputer 12051 can perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like.

In addition, the microcomputer 12051 can perform cooperative control intended for automated driving, which makes the vehicle to travel automatedly without depending on the operation of the driver, or the like, by controlling the driving force generating device, the steering mechanism, the braking device, or the like on the basis of the information about the outside or inside of the vehicle which information is obtained by the outside-vehicle information detecting unit 12030 or the in-vehicle information detecting unit 12040.

In addition, the microcomputer 12051 can output a control command to the body system control unit 12020 on the basis of the information about the outside of the vehicle which information is obtained by the outside-vehicle information detecting unit 12030. For example, the microcomputer 12051 can perform cooperative control intended to prevent a glare by controlling the headlamp so as to change from a high beam to a low beam, for example, in accordance with the position of a preceding vehicle or an oncoming vehicle detected by the outside-vehicle information detecting unit 12030.

The sound/image output section 12052 transmits an output signal of at least one of a sound and an image to an output device capable of visually or auditorily notifying information to an occupant of the vehicle or the outside of the vehicle. In the example of Fig. 17, an audio speaker 12061, a display section 12062, and an instrument panel 12063 are illustrated as the output device. The display section 12062 may, for example, include at least one of an on-board display and a head-up display.

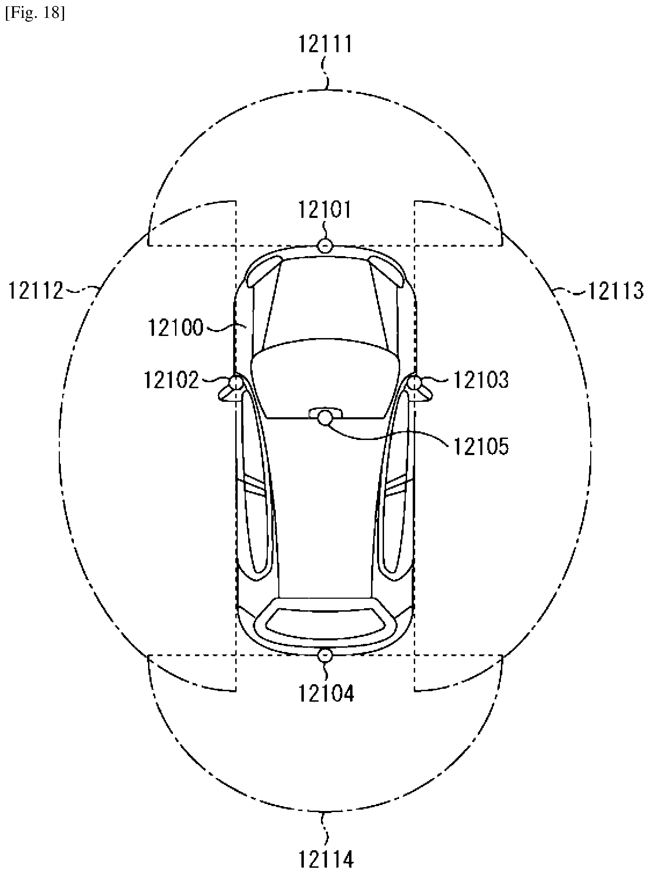

Fig. 18 is a diagram depicting an example of the installation position of the imaging section 12031.

In Fig. 18, the imaging section 12031 includes imaging sections 12101, 12102, 12103, 12104, and 12105.

The imaging sections 12101, 12102, 12103, 12104, and 12105 are, for example, disposed at positions on a front nose, sideview mirrors, a rear bumper, and a back door of the vehicle 12100 as well as a position on an upper portion of a windshield within the interior of the vehicle. The imaging section 12101 provided to the front nose and the imaging section 12105 provided to the upper portion of the windshield within the interior of the vehicle obtain mainly an image of the front of the vehicle 12100. The imaging sections 12102 and 12103 provided to the sideview mirrors obtain mainly an image of the sides of the vehicle 12100. The imaging section 12104 provided to the rear bumper or the back door obtains mainly an image of the rear of the vehicle 12100. The imaging section 12105 provided to the upper portion of the windshield within the interior of the vehicle is used mainly to detect a preceding vehicle, a pedestrian, an obstacle, a signal, a traffic sign, a lane, or the like.

Incidentally, Fig. 18 depicts an example of photographing ranges of the imaging sections 12101 to 12104. An imaging range 12111 represents the imaging range of the imaging section 12101 provided to the front nose. Imaging ranges 12112 and 12113 respectively represent the imaging ranges of the imaging sections 12102 and 12103 provided to the sideview mirrors. An imaging range 12114 represents the imaging range of the imaging section 12104 provided to the rear bumper or the back door. A bird's-eye image of the vehicle 12100 as viewed from above is obtained by superimposing image data imaged by the imaging sections 12101 to 12104, for example.

At least one of the imaging sections 12101 to 12104 may have a function of obtaining distance information. For example, at least one of the imaging sections 12101 to 12104 may be a stereo camera constituted of a plurality of imaging elements, or may be an imaging element having pixels for phase difference detection.

For example, the microcomputer 12051 can determine a distance to each three-dimensional object within the imaging ranges 12111 to 12114 and a temporal change in the distance (relative speed with respect to the vehicle 12100) on the basis of the distance information obtained from the imaging sections 12101 to 12104, and thereby extract, as a preceding vehicle, a nearest three-dimensional object in particular that is present on a traveling path of the vehicle 12100 and which travels in substantially the same direction as the vehicle 12100 at a predetermined speed (for example, equal to or more than 0 km/hour). Further, the microcomputer 12051 can set a following distance to be maintained in front of a preceding vehicle in advance, and perform automatic brake control (including following stop control), automatic acceleration control (including following start control), or the like. It is thus possible to perform cooperative control intended for automated driving that makes the vehicle travel automatedly without depending on the operation of the driver or the like.

For example, the microcomputer 12051 can classify three-dimensional object data on three-dimensional objects into three-dimensional object data of a two-wheeled vehicle, a standard-sized vehicle, a large-sized vehicle, a pedestrian, a utility pole, and other three-dimensional objects on the basis of the distance information obtained from the imaging sections 12101 to 12104, extract the classified three-dimensional object data, and use the extracted three-dimensional object data for automatic avoidance of an obstacle. For example, the microcomputer 12051 identifies obstacles around the vehicle 12100 as obstacles that the driver of the vehicle 12100 can recognize visually and obstacles that are difficult for the driver of the vehicle 12100 to recognize visually. Then, the microcomputer 12051 determines a collision risk indicating a risk of collision with each obstacle. In a situation in which the collision risk is equal to or higher than a set value and there is thus a possibility of collision, the microcomputer 12051 outputs a warning to the driver via the audio speaker 12061 or the display section 12062, and performs forced deceleration or avoidance steering via the driving system control unit 12010. The microcomputer 12051 can thereby assist in driving to avoid collision.

At least one of the imaging sections 12101 to 12104 may be an infrared camera that detects infrared rays. The microcomputer 12051 can, for example, recognize a pedestrian by determining whether or not there is a pedestrian in imaged images of the imaging sections 12101 to 12104. Such recognition of a pedestrian is, for example, performed by a procedure of extracting characteristic points in the imaged images of the imaging sections 12101 to 12104 as infrared cameras and a procedure of determining whether or not it is the pedestrian by performing pattern matching processing on a series of characteristic points representing the contour of the object. When the microcomputer 12051 determines that there is a pedestrian in the imaged images of the imaging sections 12101 to 12104, and thus recognizes the pedestrian, the sound/image output section 12052 controls the display section 12062 so that a square contour line for emphasis is displayed so as to be superimposed on the recognized pedestrian. The sound/image output section 12052 may also control the display section 12062 so that an icon or the like representing the pedestrian is displayed at a desired position.

The above has described the example of the mobile body control system to which the technology according to an embodiment of the present disclosure may be applied. The technology according to an embodiment of the present disclosure may be applied, for example, to the imaging section 12031 among the components described above. Specifically, for example, the photodetector 1 is applicable to the imaging section 12031. The application of the technology according to an embodiment of the present disclosure to the imaging section 12031 makes it possible to obtain a high-definition shot image and makes it possible to perform highly accurate control using the shot image in the mobile body control system.

### (Example of Practical Application to Endoscopic Surgery System)

The technology (the present technology) according to an embodiment the present disclosure is applicable to a variety of products. For example, the technology according to an embodiment of the present disclosure may be applied to an endoscopic surgery system.

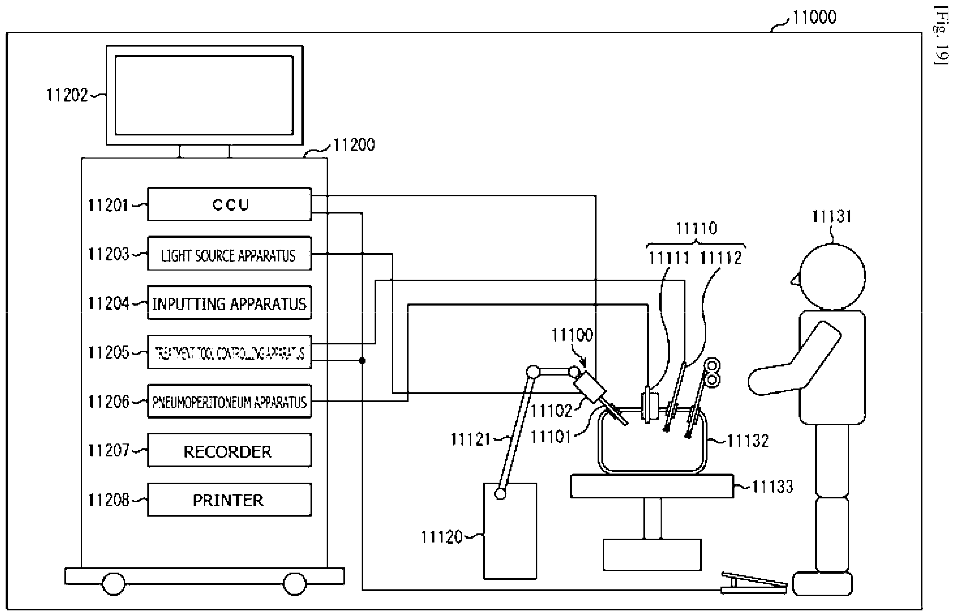

Fig. 19 is a view depicting an example of a schematic configuration of an endoscopic surgery system to which the technology according to an embodiment of the present disclosure (present technology) can be applied.

In Fig. 19, a state is illustrated in which a surgeon (medical doctor) 11131 is using an endoscopic surgery system 11000 to perform surgery for a patient 11132 on a patient bed 11133. As depicted, the endoscopic surgery system 11000 includes an endoscope 11100, other surgical tools 11110 such as a pneumoperitoneum tube 11111 and an energy device 11112, a supporting arm apparatus 11120 which supports the endoscope 11100 thereon, and a cart 11200 on which various apparatus for endoscopic surgery are mounted.

The endoscope 11100 includes a lens barrel 11101 having a region of a predetermined length from a distal end thereof to be inserted into a body cavity of the patient 11132, and a camera head 11102 connected to a proximal end of the lens barrel 11101. In the example depicted, the endoscope 11100 is depicted which includes as a rigid endoscope having the lens barrel 11101 of the hard type. However, the endoscope 11100 may otherwise be included as a flexible endoscope having the lens barrel 11101 of the flexible type.

The lens barrel 11101 has, at a distal end thereof, an opening in which an objective lens is fitted. A light source apparatus 11203 is connected to the endoscope 11100 such that light generated by the light source apparatus 11203 is introduced to a distal end of the lens barrel 11101 by a light guide extending in the inside of the lens barrel 11101 and is irradiated toward an observation target in a body cavity of the patient 11132 through the objective lens. It is to be noted that the endoscope 11100 may be a forward-viewing endoscope or may be an oblique-viewing endoscope or a side-viewing endoscope.

An optical system and an image pickup element are provided in the inside of the camera head 11102 such that reflected light (observation light) from the observation target is condensed on the image pickup element by the optical system. The observation light is photo-electrically converted by the image pickup element to generate an electric signal corresponding to the observation light, namely, an image signal corresponding to an observation image. The image signal is transmitted as RAW data to a CCU 11201.

The CCU 11201 includes a central processing unit (CPU), a graphics processing unit (GPU) or the like and integrally controls operation of the endoscope 11100 and a display apparatus 11202. Further, the CCU 11201 receives an image signal from the camera head 11102 and performs, for the image signal, various image processes for displaying an image based on the image signal such as, for example, a development process (demosaic process).

The display apparatus 11202 displays thereon an image based on an image signal, for which the image processes have been performed by the CCU 11201, under the control of the CCU 11201.

The light source apparatus 11203 includes a light source such as, for example, a light emitting diode (LED) and supplies irradiation light upon imaging of a surgical region to the endoscope 11100.

An inputting apparatus 11204 is an input interface for the endoscopic surgery system 11000. A user can perform inputting of various kinds of information or instruction inputting to the endoscopic surgery system 11000 through the inputting apparatus 11204. For example, the user would input an instruction or a like to change an image pickup condition (type of irradiation light, magnification, focal distance or the like) by the endoscope 11100.

A treatment tool controlling apparatus 11205 controls driving of the energy device 11112 for cautery or incision of a tissue, sealing of a blood vessel or the like. A pneumoperitoneum apparatus 11206 feeds gas into a body cavity of the patient 11132 through the pneumoperitoneum tube 11111 to inflate the body cavity in order to secure the field of view of the endoscope 11100 and secure the working space for the surgeon. A recorder 11207 is an apparatus capable of recording various kinds of information relating to surgery. A printer 11208 is an apparatus capable of printing various kinds of information relating to surgery in various forms such as a text, an image or a graph.

It is to be noted that the light source apparatus 11203 which supplies irradiation light when a surgical region is to be imaged to the endoscope 11100 may include a white light source which includes, for example, an LED, a laser light source or a combination of them. Where a white light source includes a combination of red, green, and blue (RGB) laser light sources, since the output intensity and the output timing can be controlled with a high degree of accuracy for each color (each wavelength), adjustment of the white balance of a picked up image can be performed by the light source apparatus 11203. Further, in this case, if laser beams from the respective RGB laser light sources are irradiated time-divisionally on an observation target and driving of the image pickup elements of the camera head 11102 are controlled in synchronism with the irradiation timings. Then images individually corresponding to the R, G and B colors can be also picked up time-divisionally. According to this method, a color image can be obtained even if color filters are not provided for the image pickup element.

Further, the light source apparatus 11203 may be controlled such that the intensity of light to be outputted is changed for each predetermined time. By controlling driving of the image pickup element of the camera head 11102 in synchronism with the timing of the change of the intensity of light to acquire images time-divisionally and synthesizing the images, an image of a high dynamic range free from underexposed blocked up shadows and overexposed highlights can be created.

Further, the light source apparatus 11203 may be configured to supply light of a predetermined wavelength band ready for special light observation. In special light observation, for example, by utilizing the wavelength dependency of absorption of light in a body tissue to irradiate light of a narrow band in comparison with irradiation light upon ordinary observation (namely, white light), narrow band observation (narrow band imaging) of imaging a predetermined tissue such as a blood vessel of a superficial portion of the mucous membrane or the like in a high contrast is performed. Alternatively, in special light observation, fluorescent observation for obtaining an image from fluorescent light generated by irradiation of excitation light may be performed. In fluorescent observation, it is possible to perform observation of fluorescent light from a body tissue by irradiating excitation light on the body tissue (autofluorescence observation) or to obtain a fluorescent light image by locally injecting a reagent such as indocyanine green (ICG) into a body tissue and irradiating excitation light corresponding to a fluorescent light wavelength of the reagent upon the body tissue. The light source apparatus 11203 can be configured to supply such narrow-band light and/ or excitation light suitable for special light observation as described above.

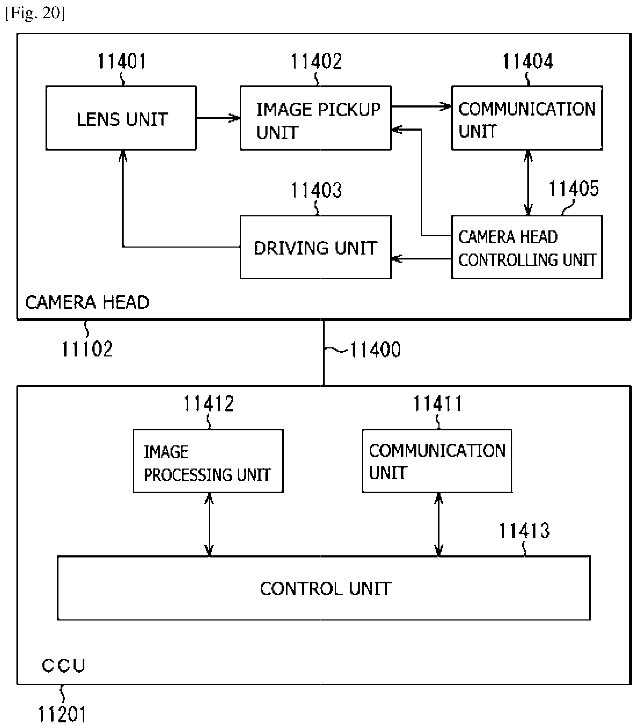

Fig. 20 is a block diagram depicting an example of a functional configuration of the camera head 11102 and the CCU 11201 depicted in Fig. 19.

The camera head 11102 includes a lens unit 11401, an image pickup unit 11402, a driving unit 11403, a communication unit 11404 and a camera head controlling unit 11405. The CCU 11201 includes a communication unit 11411, an image processing unit 11412 and a control unit 11413. The camera head 11102 and the CCU 11201 are connected for communication to each other by a transmission cable 11400.

The lens unit 11401 is an optical system, provided at a connecting location to the lens barrel 11101. Observation light taken in from a distal end of the lens barrel 11101 is guided to the camera head 11102 and introduced into the lens unit 11401. The lens unit 11401 includes a combination of a plurality of lenses including a zoom lens and a focusing lens.

The number of image pickup elements which is included by the image pickup unit 11402 may be one (single-plate type) or a plural number (multi-plate type). Where the image pickup unit 11402 is configured as that of the multi-plate type, for example, image signals corresponding to respective R, G and B are generated by the image pickup elements, and the image signals may be synthesized to obtain a color image. The image pickup unit 11402 may also be configured so as to have a pair of image pickup elements for acquiring respective image signals for the right eye and the left eye ready for three dimensional (3D) display. If 3D display is performed, then the depth of a living body tissue in a surgical region can be comprehended more accurately by the surgeon 11131. It is to be noted that, where the image pickup unit 11402 is configured as that of stereoscopic type, a plurality of systems of lens units 11401 are provided corresponding to the individual image pickup elements.

Further, the image pickup unit 11402 may not necessarily be provided on the camera head 11102. For example, the image pickup unit 11402 may be provided immediately behind the objective lens in the inside of the lens barrel 11101.

The driving unit 11403 includes an actuator and moves the zoom lens and the focusing lens of the lens unit 11401 by a predetermined distance along an optical axis under the control of the camera head controlling unit 11405. Consequently, the magnification and the focal point of a picked up image by the image pickup unit 11402 can be adjusted suitably.

The communication unit 11404 includes a communication apparatus for transmitting and receiving various kinds of information to and from the CCU 11201. The communication unit 11404 transmits an image signal acquired from the image pickup unit 11402 as RAW data to the CCU 11201 through the transmission cable 11400.

In addition, the communication unit 11404 receives a control signal for controlling driving of the camera head 11102 from the CCU 11201 and supplies the control signal to the camera head controlling unit 11405. The control signal includes information relating to image pickup conditions such as, for example, information that a frame rate of a picked up image is designated, information that an exposure value upon image picking up is designated and/or information that a magnification and a focal point of a picked up image are designated.

It is to be noted that the image pickup conditions such as the frame rate, exposure value, magnification or focal point may be designated by the user or may be set automatically by the control unit 11413 of the CCU 11201 on the basis of an acquired image signal. In the latter case, an auto exposure (AE) function, an auto focus (AF) function and an auto white balance (AWB) function are incorporated in the endoscope 11100.

The camera head controlling unit 11405 controls driving of the camera head 11102 on the basis of a control signal from the CCU 11201 received through the communication unit 11404.

The communication unit 11411 includes a communication apparatus for transmitting and receiving various kinds of information to and from the camera head 11102. The communication unit 11411 receives an image signal transmitted thereto from the camera head 11102 through the transmission cable 11400.

Further, the communication unit 11411 transmits a control signal for controlling driving of the camera head 11102 to the camera head 11102. The image signal and the control signal can be transmitted by electrical communication, optical communication or the like.

The image processing unit 11412 performs various image processes for an image signal in the form of RAW data transmitted thereto from the camera head 11102.

The control unit 11413 performs various kinds of control relating to image picking up of a surgical region or the like by the endoscope 11100 and display of a picked up image obtained by image picking up of the surgical region or the like. For example, the control unit 11413 creates a control signal for controlling driving of the camera head 11102.

Further, the control unit 11413 controls, on the basis of an image signal for which image processes have been performed by the image processing unit 11412, the display apparatus 11202 to display a picked up image in which the surgical region or the like is imaged. Thereupon, the control unit 11413 may recognize various objects in the picked up image using various image recognition technologies. For example, the control unit 11413 can recognize a surgical tool such as forceps, a particular living body region, bleeding, mist when the energy device 11112 is used and so forth by detecting the shape, color and so forth of edges of objects included in a picked up image. The control unit 11413 may cause, when it controls the display apparatus 11202 to display a picked up image, various kinds of surgery supporting information to be displayed in an overlapping manner with an image of the surgical region using a result of the recognition. Where surgery supporting information is displayed in an overlapping manner and presented to the surgeon 11131, the burden on the surgeon 11131 can be reduced and the surgeon 11131 can proceed with the surgery with certainty.

The transmission cable 11400 which connects the camera head 11102 and the CCU 11201 to each other is an electric signal cable ready for communication of an electric signal, an optical fiber ready for optical communication or a composite cable ready for both of electrical and optical communications.

Here, while, in the example depicted, communication is performed by wired communication using the transmission cable 11400, the communication between the camera head 11102 and the CCU 11201 may be performed by wireless communication.

The above has described the example of the endoscopic surgery system to which the technology according to an embodiment of the present disclosure may be applied. The technology according to an embodiment of the present disclosure may be favorably applied, for example, to the image pickup unit 11402 provided to the camera head 11102 of the endoscope 11100 among the components described above. The application of the technology according to an embodiment of the present disclosure to the image pickup unit 11402 makes it possible to increase the sensitivity of the image pickup unit 11402 and makes it possible to provide the high-definition endoscope 11100.

It should be understood by those skilled in the art that various modifications, combinations, sub-combinations and alterations may occur depending on design requirements and other factors insofar as they are within the scope of the appended claims.

### Reference Signs List

1 photodetector (light detecting device)
10a, 10b light receiving element
20a, 20b generation part (generation circuit)
25a, 25b supply part (supply circuit)
30a, 30b counter part (counter circuit)
35 control part (control circuit)
40 determination part (determination circuit)
60 bit inversion part (bit inversion circuit)
70a, 70b addition part (addition circuit)
75a, 75b memory part
100 pixel unit
110 processor
120a, 120b pixel circuit section
130a, 130b signal processing section
140a first circuit unit
140b second circuit unit

## Claims

1. A light detecting device (1) comprising:
a first pixel (P1) including a first light receiving element (10a) that includes a single photon avalanche diode and is configured to receive light;
a first generation circuit (20a) configured to generate a voltage signal (S2a) based on an output (S1a) of the first light receiving element (10a) corresponding to an incident photon;
a first circuit (140a) coupled to the first light receiving element (10a) and configured to output a first signal (S11) related to a motion of a target and a second signal (S12) related to an intensity value;
wherein the first circuit (140a) includes a counter part (30a) configured to count pulses of the voltage signal (S2a);
a second pixel (P2) including a second light receiving element (10b) that includes a single photon avalanche diode and is configured to receive light;
a second generation circuit (20b) configured to generate a voltage signal (S2b) based on an output (S1) of the second light receiving element (10b) corresponding to an incident photon; and
a second circuit (140b) coupled to the second light receiving element (10b) and configured to output a third signal (S13) related to a distance to the target;
wherein the first circuit (140a) is configured to output the first signal (S11) based on a difference between a count value of the counter part (30a) in a first period (Ta1, Tan) and a count value of the counter part (30a) in a second period (Tb1, Tbn), the voltage signals (S2a) being based on an output (S1b) of the first light receiving element (10a);
wherein the first circuit (140a) is configured to output the second signal (S12) based on a sum of the count value in the first period (Ta1, Tan) and the count value in the second period (Tb1, Tbn);
wherein the second circuit (140b) is configured to generate a signal (S4) that indicates a number of pulses of a voltage signal (S2b) from the second light receiving element (10b), and to calculate the distance to the target based on a phase difference between a timing of light emission from a light source (220) and a timing of the signal (S4) derived from reflection of said light, to generate the third signal (S13);
wherein the first circuit (140a) is configured to end the first period (Ta1, Tan) and to start the second period (Tb1, Tbn) when the count value in the first period (Ta1, Tan) reaches a reference value; and
wherein the first circuit (140a) is configured to set the length of the second period (Tbl,Tbn) equal to the length of the first period (Ta1, Tan).

2. The light detecting device (1) according to claim 1, wherein
the first light receiving element (10a) is configured to receive visible light, and
the second light receiving element (10b) is configured to receive non-visible light.

3. The light detecting device (1) according to claim 1 or 2, wherein
the counter part includes a first counter circuit (30a) configured to output a differential signal (S3) based on the difference between the count value in the first period (Ta1, Tan) and the count value in the second period (Tb1, Tbn), and
the first counter circuit (30a) is configured to output a detection signal indicating that the count value in the first period has reached the reference value.

4. The light detecting device (1) according to claim 3, wherein the first counter circuit (30a) includes an up-down counter.

5. The light detecting device (1) according to claim 3 or 4, wherein
the first circuit (140a) includes a control circuit (35) configured to control the first counter circuit (30a), and
the control circuit (35) is configured to output a stop signal indicating an end of the second period (Tb1, Tbn) to the first counter circuit (30a) based on a start signal indicating a start of the first period (Ta1, Tan) and on the detection signal indicating an end of the first period (Ta1, Tan).

6. The light detecting device (1) according to claim 5, wherein the control circuit (35) is configured to output the stop signal indicating the end of the second period (Tb1, Tbn) to the first counter circuit (30a) and thereby to equalize respective lengths of the first period (Ta1, Tan) and the second period (Tb1, Tbn).

7. The light detecting device (1) according to claim 5 or 6, wherein the control circuit (35) includes a timing generator.

8. The light detecting device (1) according to any one of the preceding claims, wherein the first generation circuit (20a) and/or the second generation circuit (20b) include an inverter.

9. The light detecting device (1) according to any one of the preceding claims, comprising:
a first substrate (101) including a plurality of the first light receiving elements (P1) and a plurality of the second light receiving elements (P2); and
a second substrate (102) including at least a portion of the first circuit (140a) and the second circuit (140b), the first substrate (101) being stacked on the second substrate (102).

10. The light detecting device (1) according to any one of the preceding claims, further comprising a light source controller (210) configured to control a light source (220).

11. The light detecting device (1) according to claim 10, wherein the first circuit (140a) is configured to generate a region signal (S15) related to a region of the target based on the first signal (S11), wherein the region signal (S15) indicates a region in which an event occurs;
in particular wherein the light source controller (210) is configured to control at least one of a light emission position, a light density, and an output power of the light source (220) based on the region signal (S15).

12. The light detecting device (1) according to claim 11, wherein
the second circuit (140b) includes at least one second counter circuit (30b) configured to count a number of voltage signals (S2b) based on an output (S1) of the second light receiving element (10b), and
the second circuit (140b) is configured to output the third signal (S13) based on the number of voltage signals (S2b); and/or
wherein the second circuit (140b) is configured to output the third signal (S13) related to a distance to the target based on the region signal (S15), wherein the second circuit (140b) is configured to generate the third signal (S13) of the second light receiving element (10b) that has received reflection light from the region indicated by the region signal (S15).

13. The light detecting device (1) according to claim 12, wherein the light source controller (210) is configured to control at least one of a light emission position, a light density, and an output power of the light source (220) based on the third signal (S15).

14. The light detecting device (1) according to any one of the preceding claims, wherein the light detecting device (1) comprises a pixel array comprising the first pixel (P1) and the second pixel (P2).

15. A photodetection system comprising:
a light source (220);
the light detecting device (1) of claim 1; and
a light source controller (210) configured to control the light source (220) based on a signal outputted from the light detecting device (1).

## Patentansprüche

1. Lichterfassungsvorrichtung (1), umfassend:
ein erstes Pixel (P1) einschließlich eines ersten Lichtempfangselements (10a), das eine Einzelphotonen-Lawinendiode einschließt und konfiguriert ist, um Licht zu empfangen;
eine erste Erzeugungsschaltung (20a), die konfiguriert ist, um ein Spannungssignal (S2a) basierend auf einer Ausgabe (S1a) des ersten Lichtempfangselements (10a) entsprechend einem einfallenden Photon zu erzeugen;
eine erste Schaltung (140a), die an das erste Lichtempfangselement (10a) gekoppelt ist und konfiguriert ist, um ein erstes Signal (S11) bezüglich einer Bewegung eines Ziels und ein zweites Signal (S12) bezüglich eines Intensitätswerts auszugeben;
wobei die erste Schaltung (140a) einen Zählerteil (30a) einschließt, der konfiguriert ist, um Impulse des Spannungssignals (S2a) zu zählen;
ein zweites Pixel (P2) einschließlich eines zweiten Lichtempfangselements (10b), das eine Einzelphotonen-Lawinendiode einschließt und konfiguriert ist, um Licht zu empfangen;
eine zweite Erzeugungsschaltung (20b), die konfiguriert ist, um ein Spannungssignal (S2b) basierend auf einer Ausgabe (S1) des zweiten Lichtempfangselements (10b) entsprechend einem einfallenden Photon zu erzeugen; und
eine zweite Schaltung (140b), die an das zweite Lichtempfangselement (10b) gekoppelt ist und konfiguriert ist, um ein drittes Signal (S13) bezüglich einer Entfernung zu dem Ziel auszugeben;
wobei die erste Schaltung (140a) konfiguriert ist, um das erste Signal (S11) basierend auf einer Differenz zwischen einem Zählwert des Zählerteils (30a) in einem ersten Zeitraum (Ta1, Tan) und einem Zählwert des Zählerteils (30a) in einem zweiten Zeitraum (Tb1, Tbn) auszugeben, wobei die Spannungssignale (S2a) auf einer Ausgabe (S1b) des ersten Lichtempfangselements (10a) basieren;
wobei die erste Schaltung (140a) konfiguriert ist, um das zweite Signal (S12) basierend auf einer Summe des Zählwerts in dem ersten Zeitraum (Ta1, Tan) und des Zählwerts in dem zweiten Zeitraum (Tb1, Tbn) auszugeben;
wobei die zweite Schaltung (140b) konfiguriert ist, um ein Signal (S4) zu erzeugen, das eine Anzahl von Impulsen eines Spannungssignals (S2b) von dem zweiten Lichtempfangselement (10b) anzeigt, und die Entfernung zu dem Ziel basierend auf einer Phasendifferenz zwischen einem Zeitpunkt der Lichtemission von einer Lichtquelle (220) und einem Zeitpunkt des Signals (S4), das von der Reflexion des Lichts abgeleitet ist, zu berechnen, um das dritte Signal (S13) zu erzeugen;
wobei die erste Schaltung (140a) konfiguriert ist, um den ersten Zeizraum (Ta1, Tan) zu beenden und den zweiten Zeitzraum (Tb1, Tbn) zu starten, wenn der Zählwert in dem ersten Zeitraum (Ta1, Tan) einen Referenzwert erreicht; und
wobei die erste Schaltung (140a) konfiguriert ist, um die Länge des zweiten Zeitraums (Tb1, Tbn) gleich der Länge des ersten Zeitraums (Ta1, Tan) zu setzen.

2. Lichterfassungsvorrichtung (1) nach Anspruch 1, wobei
das erste Lichtempfangselement (10a) konfiguriert ist, um sichtbares Licht zu empfangen, und
das zweite Lichtempfangselement (10b) konfiguriert ist, um nichtsichtbares Licht zu empfangen.

3. Lichterfassungsvorrichtung (1) nach Anspruch 1 oder 2, wobei
der Zählerteil eine erste Zählerschaltung (30a) einschließt, die konfiguriert ist, um ein Differenzsignal (S3) basierend auf der Differenz zwischen dem Zählwert in dem ersten Zeitraum (Ta1, Tan) und dem Zählwert in dem zweiten Zeitraum (Tb1, Tbn) auszugeben, und
die erste Zählerschaltung (30a) konfiguriert ist, um ein Erfassungssignal auszugeben, das anzeigt, dass der Zählwert in dem ersten Zeitraum den Referenzwert erreicht hat.

4. Lichterfassungsvorrichtung (1) nach Anspruch 3, wobei die erste Zählerschaltungs (30a) einen Aufwärts-Abwärts-Zähler einschließt.

5. Lichterfassungsvorrichtung (1) nach Anspruch 3 oder 4, wobei
die erste Schaltung (140a) eine Steuerschaltung (35) einschließt, die konfiguriert ist, um die erste Zählerschaltung (30a) zu steuern, und
die Steuerschaltung (35) konfiguriert ist, um ein Stoppsignal, das ein Ende des zweiten Zeitraums (Tb1, Tbn) anzeigt, an die erste Zählerschaltung (30a) basierend auf einem Startsignal, das einen Start des ersten Zeitraums (Ta1, Tan) anzeigt, und auf dem Erfassungssignal, das ein Ende des ersten Zeitraums (Ta1, Tan) anzeigt, auszugeben.

6. Lichterfassungsvorrichtung (1) nach Anspruch 5, wobei die Steuerschaltung (35) konfiguriert ist, um das Stoppsignal, das das Ende des zweiten Zeitraums (Tb1, Tbn) anzeigt, an die erste Zählerschaltung (30a) auszugeben und dadurch jeweilige Längen des ersten Zeitraums (Ta1, Tan) und des zweiten Zeitraums (Tb1, Tbn) anzugleichen.

7. Lichterfassungsvorrichtung (1) nach Anspruch 5 oder 6, wobei die Steuerschaltung (35) einen Zeitpunkt-Generator einschließt.

8. Lichterfassungsvorrichtung (1) nach einem der vorstehenden Ansprüche, wobei die erste Erzeugungsschaltung (20a) und/oder die zweite Erzeugungsschaltung (20b) einen Inverter einschließen.

9. Lichterfassungsvorrichtung (1) nach einem der vorstehenden Ansprüche, umfassend:
ein erstes Substrat (101) einschließlich einer Vielzahl der ersten Lichtempfangselemente (P1) und einer Vielzahl der zweiten Lichtempfangselemente (P2); und
ein zweites Substrat (102) einschließlich mindestens eines Abschnitts der ersten Schaltung (140a) und der zweiten Schaltung (140b), wobei das erste Substrat (101) auf dem zweiten Substrat (102) gestapelt ist.

10. Lichterfassungsvorrichtung (1) nach einem der vorstehenden Ansprüche, ferner umfassend eine Lichtquellensteuerung (210), die konfiguriert ist, um eine Lichtquelle (220) zu steuern.

11. Lichterfassungsvorrichtung (1) nach Anspruch 10, wobei die erste Schaltung (140a) konfiguriert ist, um ein Bereichssignal (S15) bezüglich eines Bereichs des Ziels basierend auf dem ersten Signal (S11) zu erzeugen, wobei das Bereichssignal (S15) einen Bereich anzeigt, in dem ein Ereignis auftritt;
insbesondere wobei die Lichtquellensteuerung (210) konfiguriert ist, um mindestens eines von einer Lichtemissionsposition, einer Lichtdichte und einer Ausgangsleistung der Lichtquelle (220) basierend auf dem Bereichssignal (S15) zu steuern.

12. Lichterfassungsvorrichtung (1) nach Anspruch 11, wobei
die zweite Schaltung (140b) mindestens eine zweite Zählerschaltung (30b) einschließt, die konfiguriert ist, um eine Anzahl von Spannungssignalen (S2b) basierend auf einer Ausgabe (S1) des zweiten Lichtempfangselements (10b) zu zählen, und
die zweite Schaltung (140b) konfiguriert ist, um das dritte Signal (S13) basierend auf der Anzahl von Spannungssignalen (S2b) auszugeben; und/oder
wobei die zweite Schaltung (140b) konfiguriert ist, um das dritte Signal (S13) bezüglich einer Entfernung zu dem Ziel basierend auf dem Bereichssignal (S15) auszugeben, wobei die zweite Schaltung (140b) konfiguriert ist, um das dritte Signal (S13) des zweiten Lichtempfangselements (10b) zu erzeugen, das Reflexionslicht von dem durch das Bereichssignal (S15) angezeigten Bereich empfangen hat.

13. Lichterfassungsvorrichtung (1) nach Anspruch 12, wobei die Lichtquellensteuerung (210) konfiguriert ist, um mindestens eines von einer Lichtemissionsposition, einer Lichtdichte und einer Ausgangsleistung der Lichtquelle (220) basierend auf dem dritten Signal (S15) zu steuern.

14. Lichterfassungsvorrichtung (1) nach einem der vorstehenden Ansprüche, wobei die Lichterfassungsvorrichtung (1) ein Pixelarray umfasst, das das erste Pixel (P1) und das zweite Pixel (P2) umfasst.

15. Fotodetektionssystem, umfassend:
eine Lichtquelle (220);
das Lichtempfangselement (1) nach Anspruch 1, und
eine Lichtquellensteuerung (210), die konfiguriert ist, um die Lichtquelle (220) basierend auf einem Signal zu steuern, das von der Lichterfassungsvorrichtung (1) ausgegeben wird.

## Revendications

1. Dispositif de détection de lumière (1) comprenant :
un premier pixel (P1) comportant un premier élément de réception de lumière (10a) qui comporte une diode à avalanche à photon unique et est configuré pour recevoir de la lumière ;
un premier circuit de génération (20a) configuré pour générer un signal de tension (S2a) en fonction d'une sortie (S1a) du premier élément de réception de lumière (10a) correspondant à un photon incident ;
un premier circuit (140a) couplé au premier élément de réception de lumière (10a) et configuré pour délivrer en sortie un premier signal (S11) apparenté à un mouvement d'une cible et un deuxième signal (S12) apparenté à une valeur d'intensité ;
dans lequel le premier circuit (140a) comporte une partie compteur (30a) configurée pour compter des impulsions du signal de tension (S2a) ;
un second pixel (P2) comportant un second élément de réception de lumière (10b) qui comporte une diode à avalanche à photon unique et est configuré pour recevoir de la lumière ;
un second circuit de génération (20b) configuré pour générer un signal de tension (S2b) en fonction d'une sortie (S1) du second élément de réception de lumière (10b) correspondant à un photon incident ; et
un second circuit (140b) couplé au second élément de réception de lumière (10b) et configuré pour délivrer en sortie un troisième signal (S13) apparenté à une distance jusqu'à la cible ;
dans lequel le premier circuit (140a) est configuré pour délivrer en sortie le premier signal (Sil) en fonction d'une différence entre une valeur de comptage de la partie compteur (30a) dans une première période (Ta1, Tan) et une valeur de comptage de la partie compteur (30a) dans une seconde période (Tb1, Tbn), les signaux de tension (S2a) étant en fonction d'une sortie (S1b) du premier élément de réception de lumière (10a) ;
dans lequel le premier circuit (140a) est configuré pour délivrer en sortie le deuxième signal (S12) en fonction d'une somme de la valeur de comptage dans la première période (Ta1, Tan) et de la valeur de comptage dans la seconde période (Tb1, Tbn) ;
dans lequel le second circuit (140b) est configuré pour générer un signal (S4) qui indique un nombre d'impulsions d'un signal de tension (S2b) provenant du second élément de réception de lumière (10b), et pour calculer la distance jusqu'à la cible en fonction d'une différence de phase entre une temporisation d'émission de lumière à partir d'une source de lumière (220) et une temporisation du signal (S4) dérivé de la réflexion de ladite lumière, pour générer le troisième signal (S13) ;
dans lequel le premier circuit (140a) est configuré pour mettre fin à la première période (Ta1, Tan) et pour débuter la seconde période (Tb1, Tbn) lorsque la valeur de comptage dans la première période (Ta1, Tan) atteint une valeur de référence ; et
dans lequel le premier circuit (140a) est configuré pour régler la longueur de la seconde période (Tb1, Tbn) égale à la longueur de la première période (Ta1, Tan).

2. Dispositif de détection de lumière (1) selon la revendication 1, dans lequel
le premier élément de réception de lumière (10a) est configuré pour recevoir de la lumière visible, et
le second élément de réception de lumière (10b) est configuré pour recevoir de la lumière non visible.

3. Dispositif de détection de lumière (1) selon la revendication 1 ou 2, dans lequel
la partie compteur comporte un premier circuit compteur (30a) configuré pour délivrer en sortie un signal différentiel (S3) en fonction de la différence entre la valeur de comptage dans la première période (Ta1, Tan) et la valeur de comptage dans la seconde période (Tb1, Tbn), et
le premier circuit compteur (30a) est configuré pour délivrer en sortie un signal de détection indiquant que la valeur de comptage dans la première période a atteint la valeur de référence.

4. Dispositif de détection de lumière (1) selon la revendication 3, dans lequel le premier circuit compteur (30a) comporte un compteur incrémentiel/décrémentiel.

5. Dispositif de détection de lumière (1) selon la revendication 3 ou 4, dans lequel
le premier circuit (140a) comporte un circuit de commande (35) configuré pour commander le premier circuit compteur (30a), et
le circuit de commande (35) est configuré pour délivrer en sortie un signal d'arrêt indiquant une fin de la seconde période (Tb1, Tbn) au premier circuit compteur (30a) en fonction d'un signal de début indiquant un début de la première période (Ta1, Tan) et en fonction du signal de détection indiquant une fin de la première période (Ta1, Tan).

6. Dispositif de détection de lumière (1) selon la revendication 5, dans lequel le circuit de commande (35) est configuré pour délivrer en sortie le signal d'arrêt indiquant la fin de la seconde période (Tb1, Tbn) au premier circuit compteur (30a) et pour égaliser de ce fait les longueurs respectives de la première période (Ta1, Tan) et de la seconde période (Tb1, Tbn).

7. Dispositif de détection de lumière (1) selon la revendication 5 ou 6, dans lequel le circuit de commande (35) comporte un générateur de temporisation.

8. Dispositif de détection de lumière (1) selon l'une quelconque des revendications précédentes, dans lequel le premier circuit de génération (20a) et/ou le second circuit de génération (20b) comportent un inverseur.

9. Dispositif de détection de lumière (1) selon l'une quelconque des revendications précédentes, comprenant :
un premier substrat (101) comportant une pluralité des premiers éléments de réception de lumière (P1) et une pluralité des seconds éléments de réception de lumière (P2) ; et
un second substrat (102) comportant au moins une portion du premier circuit (140a) et du second circuit (140b), le premier substrat (101) étant empilé sur le second substrat (102).

10. Dispositif de détection de lumière (1) selon l'une quelconque des revendications précédentes, comprenant en outre un dispositif de commande de source de lumière (210) configuré pour commander une source de lumière (220).

11. Dispositif de détection de lumière (1) selon la revendication 10, dans lequel le premier circuit (140a) est configuré pour générer un signal de région (S15) apparenté à une région de la cible en fonction du premier signal (S11), dans lequel le signal de région (S15) indique une région dans laquelle un événement se produit ;
en particulier dans lequel le dispositif de commande de source de lumière (210) est configuré pour commander au moins l'une parmi une position d'émission de lumière, une densité de lumière et une puissance de sortie de la source de lumière (220) en fonction du signal de région (S15).

12. Dispositif de détection de lumière (1) selon la revendication 11, dans lequel
le second circuit (140b) comporte au moins un second circuit compteur (30b) configuré pour compter un nombre de signaux de tension (S2b) en fonction d'une sortie (S1) du second élément de réception de lumière (10b), et
le second circuit (140b) est configuré pour délivrer en sortie le troisième signal (S13) en fonction du nombre de signaux de tension (S2b) ; et/ou
dans lequel le second circuit (140b) est configuré pour délivrer en sortie le troisième signal (S13) apparenté à une distance jusqu'à la cible en fonction du signal de région (S15), dans lequel le second circuit (140b) est configuré pour générer le troisième signal (S13) du second élément de réception de lumière (10b) qui a reçu de la lumière de réflexion provenant de la région indiquée par le signal de région (S15).

13. Dispositif de détection de lumière (1) selon la revendication 12, dans lequel le dispositif de commande de source de lumière (210) est configuré pour commander au moins l'une parmi une position d'émission de lumière, une densité de lumière et une puissance de sortie de la source de lumière (220) en fonction du troisième signal (S15).

14. Dispositif de détection de lumière (1) selon l'une quelconque des revendications précédentes, dans lequel le dispositif de détection de lumière (1) comprend une matrice de pixels comprenant le premier pixel (P1) et le second pixel (P2).

15. Système de photodétection comprenant :
une source de lumière (220) ;
le dispositif de détection de lumière (1) selon la revendication 1 ; et
un dispositif de commande de source de lumière (210) configuré pour commander la source de lumière (220) en fonction d'un signal délivré en sortie par le dispositif de détection de lumière (1).
